(19) Europäisches Patentamt
European Patent Office
Office européen des brevets

(11) **EP 2 980 884 B1**

(12) **EUROPEAN PATENT SPECIFICATION**

(45) Date of publication and mention
of the grant of the patent:
**01.11.2017 Bulletin 2017/44**

(21) Application number: **14773498.2**

(22) Date of filing: **26.03.2014**

(51) Int Cl.:
*H01M 4/13* $^{(2010.01)}$       *H01M 2/02* $^{(2006.01)}$
*H01M 4/36* $^{(2006.01)}$       *H01M 4/62* $^{(2006.01)}$
*H01M 10/052* $^{(2010.01)}$     *H01M 10/0566* $^{(2010.01)}$
*H01M 10/0585* $^{(2010.01)}$    *H01M 4/04* $^{(2006.01)}$
*H01M 4/02* $^{(2006.01)}$

(86) International application number:
**PCT/JP2014/058685**

(87) International publication number:
**WO 2014/157417 (02.10.2014 Gazette 2014/40)**

(54) **NON-AQUEOUS ELECTROLYTE SECONDARY BATTERY**

SEKUNDÄRBATTERIE MIT WASSERFREIEM ELEKTROLYT

BATTERIE SECONDAIRE À ÉLECTROLYTE NON AQUEUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.03.2013 JP 2013064404**

(43) Date of publication of application:
**03.02.2016 Bulletin 2016/05**

(73) Proprietor: **NISSAN MOTOR CO., LTD.
Yokohama-shi, Kanagawa 220-8623 (JP)**

(72) Inventors:
• **MIYAMOTO, Takeshi**
  **Atsugi-shi**
  **Kanagawa 243-0123 (JP)**
• **MATSUZAKI, Ikuma**
  **Atsugi-shi**
  **Kanagawa 243-0123 (JP)**

• **HONDA, Takashi**
  **Atsugi-shi**
  **Kanagawa 243-0123 (JP)**
• **HAGIYAMA, Kousuke**
  **Atsugi-shi**
  **Kanagawa 243-0123 (JP)**

(74) Representative: **Grünecker Patent- und
Rechtsanwälte
PartG mbB
Leopoldstraße 4
80802 München (DE)**

(56) References cited:
WO-A1-2011/040562      WO-A1-2012/111546
JP-A- 2001 250 536     JP-A- 2003 045 432
JP-A- 2007 188 871     JP-A- 2008 130 570
JP-A- 2011 065 797     US-A1- 2011 281 163
US-A1- 2012 321 948

**Description**

Technical Field

The present invention relates to a non-aqueous electrolyte secondary battery.

Background Art

In recent years, developments of electric vehicles (EV), hybrid electric vehicles (HEV) and fuel cell vehicles (FCV) have been advanced against the background of escalating environmental protection movement. For a power source for driving motors used on those vehicles, a rechargeable secondary battery is suitable. In particular, what is attracting the attention is a non-aqueous electrolyte secondary battery such as a lithium ion secondary battery expected to provide high capacity and high output.

A non-aqueous electrolyte secondary battery is provided to have a positive electrode active material layer that is formed on a surface of a current collector and includes a positive electrode active material (for example, $LiCoO_2$, $LiMO_2$, or $LiNiO_2$). Additionally, the non-aqueous electrolyte secondary battery is provided to have a negative electrode active material layer that is formed on a surface of a current collector and includes a negative electrode active material (for example, metal lithium, carbonaceous materials such as cokes, natural and synthetic graphite, metal materials including Sn and Si and oxides of them).

A binder for binding an active material which is used for an active material layer is classified into an organic solvent-based binder (binder which is not dissolved/dispersed in water but dissolved/dispersed in an organic solvent) and an aqueous binder (a binder which is dissolved/dispersed in water). The organic solvent-based binder can be industrially disadvantageous due to high cost such as raw material cost for an organic solvent, recovery cost, and cost relating to waste processing. Meanwhile, the aqueous binder has an advantage of lowering a burden on environment and greatly suppressing an investment on facilities of a production line, since water as a raw material is conveniently available and only water vapor is generated during drying. The aqueous binder also has an advantage that, since the aqueous binder has a high binding effect even with a small amount compared to an organic solvent-based binder, it can increase a ratio of an active material per same volume so that a negative electrode with high capacity can be achieved.

From the viewpoint of having those advantages, various attempts have been made for forming a negative electrode by using an aqueous binder as a binder for forming an active material layer. For example, in Patent Document 1, suggested is a negative electrode for a non-aqueous electrolyte secondary battery in which a thickening agent such as carboxymethyl cellulose (CMC) is contained in a negative electrode active material layer, together with a latex-based binding agent such as styrene butadiene rubber (SBR) that is an aqueous binder. In this document, there is described a non-aqueous electrolyte secondary battery using a negative electrode obtained by coating a slurry for forming a negative electrode active material (negative electrode slurry) on a current collector, drying the slurry, and then subjecting the slurry to a heating treatment at 110°C to 300°C, and rolling and molding this. By the heating treatment after the coating, thermal decompositions of the thickening agent and the aqueous binder are progressed, and excessive thickening agent and aqueous binder are removed, whereby to improve high load discharge property. Further negative electrode active materials for non-aqueous electrolyte secondary batteries are disclosed in Patent Literature 2 and 3.

Citation List

Patent Documents

Patent Document 1: JP 2001-250536 A
Patent Document 2: US 2012/321948 A1
Patent Document 3: US 2011/281163 A1

Summary of Invention

Technical Problem

However, according to investigation of the inventors of the present invention, it was turned out that suppression of gas generation and moisture removal were not sufficient in the non-aqueous electrolyte secondary battery described in Patent Document 1. That is, when a battery is produced with an aqueous slurry using water as a solvent for adjusting viscosity, an aqueous binder and a thickening agent are necessary, but a lot of gas is generated during an initial charge in comparison to the case of using an organic binder. Thus, there is a problem that when a gas retention part is present between electrodes, uneven reaction proceeds from the part as a starting point, which has bad influence on the life-time of a battery, and the battery capacity may decrease particularly when the battery is used over a long period of time.

As such, an object of the present invention is to provide a non-aqueous electrolyte secondary battery that can suppress gas generation of a negative electrode active material layer, and has small decrease of the battery capacity despite use over a long period of time by optimizing conditions for moisture removal when an aqueous binder and a thickening agent are used in a negative electrode active material layer.

Solution to Problem

The negative electrode for a non-aqueous electrolyte secondary battery of the present invention includes a current collector, and a negative electrode active material layer containing a negative electrode active material, an aqueous binder and a thickening agent having a hydroxyl group and an ester group. Furthermore, the content of the aqueous binder in the negative electrode active material layer is 1 to 3% by mass relative to the total amount of the negative electrode active material layer, and the content of the thickening agent in the negative electrode active material layer is 0.5 to 1.5% by mass relative to the total amount of the negative electrode active material layer. In addition, the negative electrode active material layer is characterized by satisfying Formula (1) : $0.10 \leq X \leq 1.00$. Herein, X in Formula (1) described above is a ratio of a peak intensity of an infrared absorption spectrum derived from a carbonyl group of ester of the negative electrode active material layer to a peak intensity of an infrared absorption spectrum derived from a hydroxyl group of the negative electrode active material layer (C=O peak intensity/-OH peak intensity). In addition, the negative electrode active material layer is characterized in that the average center line roughness Ra of a surface of the negative electrode active material layer opposed to the current collector side is 0.5 $\mu$m to 1.0 $\mu$m, wherein Ra is determined according to JIS-B0601-1994.

Brief Description of Drawings

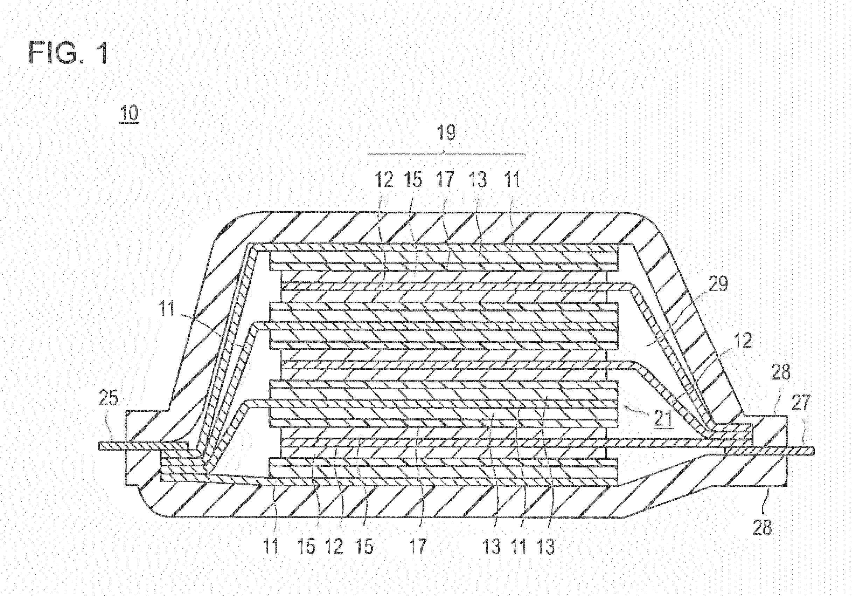

Fig. 1 is a cross-sectional view schematically illustrating the basic constitution of a non-aqueous electrolyte lithium ion secondary battery as one embodiment of an electric device, in which the non-aqueous electrolyte lithium ion secondary battery is a flat type (stack type) and not a bipolar type.

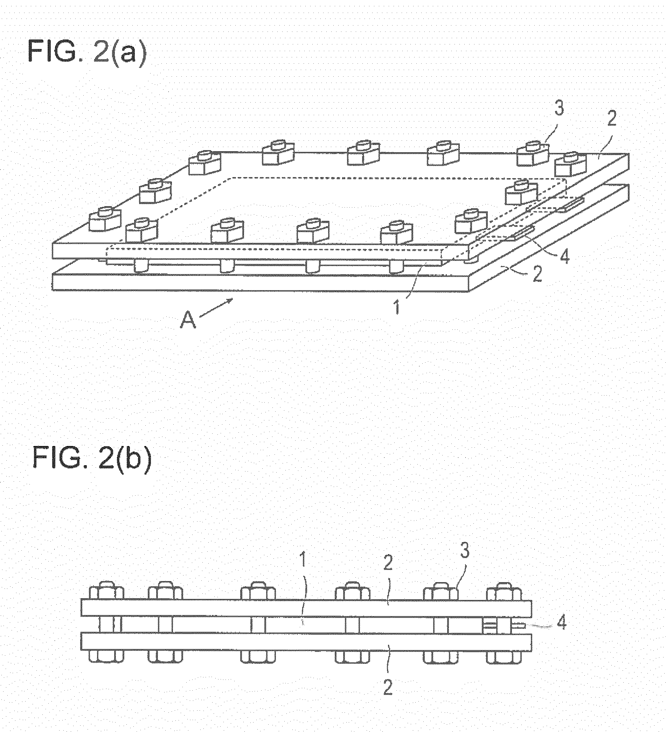

Fig. 2 (a) is a top view of a non-aqueous electrolyte secondary battery, which is a preferred embodiment of the present invention, and Fig. 2(b) is a diagram viewed from the arrow A in Fig. 2(a).

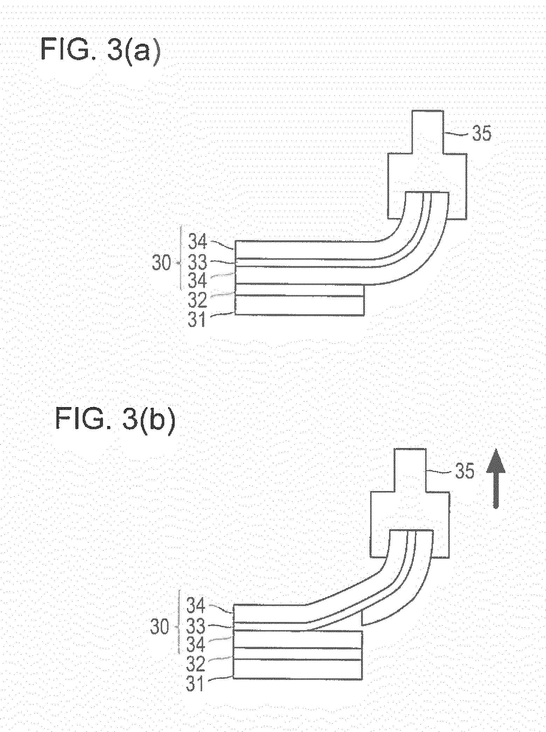

Figs. 3 are explanatory diagrams for a method of testing the peeling strength of a negative electrode active material layer performed in Examples, Fig. 3(a) is a side view schematically illustrating a form in which a sample (negative electrode) is fixed, and Fig. 3(b) is a side view schematically illustrating the state where the negative electrode active material layer of the sample (negative electrode) is peeled off.

Description of Embodiments

One aspect of an embodiment of the present invention includes a current collector, and a negative electrode active material layer containing a negative electrode active material, an aqueous binder and a thickening agent having a hydroxyl group and an ester group. Furthermore, the content of the aqueous binder in the negative electrode active material layer is 1 to 3% by mass relative to the total amount of the negative electrode active material layer, and the content of the thickening agent in the negative electrode active material layer is 0.5 to 1.5% by mass relative to the total amount of the negative electrode active material layer. In addition, a negative electrode for a non-aqueous electrolyte secondary battery is characterized in that the negative electrode active material layer satisfies the following Formula (1):
[Formula 1]

$$0.10 \leq X \leq 1.00 \quad (1)$$

Herein, X in Formula (1) is a ratio of a peak intensity of an infrared absorption spectrum derived from <u>a carbonyl group of ester</u> of the negative electrode active material layer to a peak intensity of an infrared absorption spectrum derived from <u>a hydroxyl group</u> of the negative electrode active material layer (C=O peak intensity/-OH peak intensity).

In addition, another aspect of the present embodiment is a non-aqueous electrolyte secondary battery having a power generating element enclosed in an outer casing. Further, the power generating element has a positive electrode in which a positive electrode active material layer is formed on a surface of a positive electrode current collector, a negative electrode in which a negative electrode active material layer is formed on a surface of a negative electrode current collector, and a separator that maintains an electrolyte solution. As such, the present embodiment is a non-aqueous electrolyte secondary battery which is characterized in that the negative electrode is the negative electrode for a non-aqueous electrolyte secondary battery according to the aspect described above, in which a negative electrode active material layer containing an aqueous binder and a thickening agent having a hydroxyl group and an ester group is formed on a surface of a negative electrode current collector.

By the constitutions of the non-aqueous electrolyte secondary battery or its negative electrode of the present embodiment, when an aqueous binder and a thickening agent are used in the negative electrode active material layer in the non-aqueous electrolyte secondary battery or its negative electrode, moisture is removed in the negative electrode active material layer, thereby suppressing electrolysis of the -OH group of the thickening agent and residual moisture. As a result thereof, it is possible to reduce the amount of gas generation, and it allows a non-aqueous electrolyte secondary battery having small decrease of the battery capacity despite use over a long period of time.

The inventors found that by adjusting within the content ranges described above of an aqueous binder and a thickening agent having a hydroxyl group and an ester group, and controlling X to be 0.10 or more in Formula (1), it was possible to remove moisture in the negative electrode active material layer, and to reduce the amount of gas generation. That is, the main factor for gas is electrolysis of the -OH group of the thickening agent and residual moisture. Before initial charge of a non-aqueous electrolyte secondary battery, the negative electrode (active material layer) is subjected to, for example, a heating treatment whereby to previously decompose the hydroxyl group of the thickening agent. At the time, a C=O group is generated by oxidation, and thus the value of (C=O group)/(-OH group) becomes an index of the decomposition amount of the hydroxyl group. Further, the inventors found that by carrying out a heating treatment in a degree to generate a carbonyl group of the thickening agent, it was possible to sufficiently remove residual moisture. Further, the inventors found that by adjusting within the content ranges described above of an aqueous binder and a thickening agent having a hydroxyl group and an ester group, and controlling X to be 1.00 or less in Formula (1), it was possible to suppress decrease in the binding strength of the electrode active material layer by excessive decomposition. Furthermore, in a non-aqueous electrolyte secondary battery for use in a car, high strength of vibration is input than consumer use, and thus a battery having anti-vibration and high capacity so as to lengthen the cruising range is required. The inventors also found that an aqueous slurry using an aqueous binder and a thickening agent could use water as a solvent in production of the active material layer, and had various advantages, and also had high binding strength of binding active materials, and could be adapted for use in a car. Specifically, in a large-size secondary battery used in use of an electric automobile and the like, electrode area is wide, and thus it becomes further difficult to remove gas generated from electrolysis of the -OH group of the thickening agent and residual moisture. Accordingly, the inventors found out that it was very important to suppress gas generation by sufficient removal of residual moisture, and found the constitutions of the present embodiment described above. Further, when a non-aqueous electrolyte solution for a capacitor, a lithium ion secondary battery and the like is used, it is important to remove impurities in the non-aqueous electrolyte solution. Particularly, the inventors found out that decomposition of electrolyte salts (lithium salt) was promoted by presence of moisture in a lithium ion secondary battery, and thus it was necessary to remove moisture in the battery as much as possible, and found the constitutions of the present embodiment described above. Further, excessive heating treatment such as conventional technology makes the aqueous binder and the thickening agent decomposed and degenerated resulting in decrease in the binding strength of the negative electrode active material layer (binding strength between a current collector and a negative electrode active material layer or binding strength between adjacent negative electrode active material particles), and thus peeling or crack of the negative electrode active material layer occurs. Further, the inventors found out that in automobile use, anti-vibration property was strictly required more than consumer use, and thus it was necessary to search conditions where excessive heating treatment did not decompose and degenerated an aqueous binder and a thickening agent and thus binding strength of the electrode active material layer did not decrease, and found the constitutions of the present embodiment described above.

As results of earnest investigation based on the findings described above, the inventors found out that a condition for moisture removal could be optimized by the negative electrode active material layer satisfying Formula (1) : $0.10 \leq X \leq 1.00$ when an aqueous binder and the thickening agent are used in a negative electrode active material layer. The inventors found out that by this condition, it was possible to suppress gas generation of the negative electrode active material layer, and further decreased the binding strength of the negative electrode active material layer, and suppressed decrease in the battery capacity despite use over a long period of time, and completed the present invention.

Next, a description will be made of a non-aqueous electrolyte lithium ion secondary battery as a preferred embodiment of the non-aqueous electrolyte secondary battery, but it is not limited thereto. Meanwhile, the same elements are given with the same symbols for the descriptions of the drawings, and overlapped descriptions are omitted. Further, note that dimensional ratios in the drawings are exaggerated for the description, and are different from actual ratios in some cases.

Fig. 1 is a cross-sectional view schematically illustrating the basic constitution of a non-aqueous electrolyte lithium ion secondary battery which is a flat type (stack type) and not a bipolar type (hereinbelow, it is also simply referred to as a "stack type battery"). As illustrated in Fig. 1, the stack type battery 10 according to this embodiment has a structure in which a power generating element 21 with a substantially rectangular shape, in which a charge and discharge reaction actually occurs, is sealed inside of a battery outer casing 28. Herein, the power generating element 21 has a constitution in which a positive electrode, the separator 17, and a negative electrode are stacked. Meanwhile, the separator 17 has a non-aqueous electrolyte (for example, liquid electrolyte) therein. The positive electrode has a structure in which the positive electrode active material layer 13 is disposed on both surfaces of the positive electrode current collector 11. The negative electrode has a structure in which the negative electrode active material layer 15 is disposed on both surfaces of the negative electrode current collector 12. Specifically, one positive electrode active material layer 13 and the neighboring negative electrode active material layer 15 are disposed to face each other via the separator 17, and the negative electrode, the electrolyte layer, and the positive electrode are stacked in this order. Accordingly, the neighboring positive electrode, electrolyte layer and negative electrode form one single battery layer 19. It can be also said that, as plural single barrier layers 19 are stacked, the stack type battery 10 illustrated in Fig. 1 has a constitution in which electrically parallel connection is made among them.

Meanwhile, on the outermost layer positive electrode current collector which is present on both outermost layers of the power generating element 21, the positive electrode active material layer 13 is disposed only on a single surface. However, an active material layer may be formed on both surfaces. Namely, not only a current collector exclusive for an outermost layer in which an active material layer is formed on a single surface can be achieved but also a current collector having an active material layer on both surfaces can be directly used as a current collector of an outermost layer. Furthermore, by reversing the arrangement of the positive electrode and negative electrode of Fig. 1, it is also possible that the outer most layer negative electrode current collector is disposed on both outermost layers of the power generating element 21 and a negative electrode active material layer is disposed on a single surface or both surfaces of the same outermost layer negative electrode current collector.

The positive electrode current collector 11 and negative electrode current collector 12 have a structure in which each of the positive electrode current collecting plate (tab) 25 and negative electrode current collecting plate (tab) 27, which conductively communicate with each electrode (positive electrode and negative electrode), is attached and inserted to the end part of the battery outer casing 28 so as to be led to the outside of the battery outer casing 28. If necessary, each of the positive electrode current collecting plate 25 and negative electrode current collecting plate 27 can be attached, via a positive electrode lead and negative electrode lead (not illustrated), to the positive electrode current collector 11 and negative electrode current collector 12 of each electrode by ultrasonic welding or resistance welding.

Meanwhile, although a stack type battery which is a flat type (stack type), not a bipolar type is illustrated in Fig. 1, it can be also a bipolar type battery containing a bipolar type electrode which has a positive electrode active material layer electrically bound to one surface of a current collector and a negative electrode active material layer electrically bound to the opposite surface of the current collector. In that case, one current collector plays both roles of a positive electrode current collector and a negative electrode current collector.

Hereinbelow, each member is described in more detail.

[Negative electrode]

(Negative electrode current collector)

A material for forming a negative electrode current collector is not particularly limited, but metal is preferably used.

Specific examples of the metal include aluminum, nickel, iron, stainless steel, titanium, copper, other alloys and the like. In addition to them, a clad material of nickel and aluminum, a clad material of copper and aluminum, or a plating material of a combination of those metals and the like can be preferably used. Further, it can be also a foil obtained by coating aluminum on a metal surface. Among them, from the viewpoint of electron conductivity or potential for operating a battery, aluminum, stainless steel and copper are preferable.

The size of the negative electrode current collector is determined based on use of a battery. For example, when it is used for a large-size battery which requires high energy density, a current collector with large area is used. The thickness of the current collector is not particularly limited, either. The thickness of the current collector is generally about 1 to 100 $\mu$m.

(Negative electrode active material layer)

The negative electrode active material layer contains a negative electrode active material. Examples of the negative electrode active material include a carbon material such as graphite (natural graphite and artificial graphite), soft carbon, and hard carbon, a lithium-transition metal composite oxide (for example, $Li_4Ti_5O_{12}$), a metal material, and a lithium alloy-based negative electrode material. If necessary, two or more kinds of a negative electrode active material may be used in combination. Preferably, from the viewpoint of capacity and output characteristics, a carbon material or a lithium-transition metal composite oxide is used as a negative electrode active material. Meanwhile, it is needless to say that a negative electrode active material other than those described above can be also used.

The specific surface area of the negative electrode active material would be 1 to 5 $m^2/g$, preferably 1.5 to 4.5 $m^2/g$, and more preferably 2 to 4 $m^2/g$. When the specific surface area of the negative electrode active material is 1 $m^2/g$ or more, the reaction area is sufficiently ensured, and thus it is excellent from the point of charge and discharge performance at a high rate. On the other hand, when the specific surface area of the negative electrode active material is 5 $m^2/g$ or less, it is possible to suppress decomposition reaction of electrolyte solution at the surface of the negative electrode active material, and thus it is excellent from the point of decrease in irreversible capacity and improvement in durability.

The average particle diameter of each active material contained in the negative electrode active material layer is, although not particularly limited, preferably 1 to 100 $\mu$m, and more preferably 1 to 30 $\mu$m from the viewpoint of having high output.

The negative electrode active material layer contains at least an aqueous binder. Meanwhile, the aqueous binder has an advantage of lowering a burden on environment and greatly suppressing an investment on facilities of a production line, since water as a raw material is conveniently available and only water vapor is generated during drying. Further, as it has a high binding strength for binding an active material, the mass ratio of a binder in the negative electrode active material layer can be reduced, and accordingly the mass ratio of the active material can be increased as much as the reduced amount.

The aqueous binder indicates a binder with which water is used as a solvent or a dispersion medium, and specific examples thereof include a thermoplastic resin, a polymer with rubber elasticity, a water soluble polymer, and a mixture thereof. Herein, the binder with which water is used as a dispersion medium includes all expressed as latex or an emulsion, and it indicates a polymer emulsified in water or suspended in water. Examples thereof include a polymer latex obtained by emulsion polymerization in a self-emulsifying system.

Specific examples of the aqueous binder include a styrene polymer (styrene-butadiene rubber, styrene-vinyl acetic acid copolymer, styrene-acryl copolymer or the like), acrylonitrile-butadiene rubber, methyl methacrylate-butadiene rubber, methyl methacrylate rubber, rubber obtained by converting at least a part of the methylhydroxy carbonyl groups of methyl methacrylate rubber to carboxylic acid salt, (meth)acrylic polymer (polyethylacrylate, polyethylmethacrylate, polypropylacrylate, polymethylmethacrylate (methyl methacrylate rubber), polypropylmethacrylate, polyisopropylacrylate, polyisopropylmethacrylate, polybutylacrylate, polybutylmethacrylate, polyhexylacrylate, polyhexylmethacrylate, polyethylhexylacrylate, polyethylhexylmethacrylate, polylaurylacrylate, polylaurylrnethacrylate, or the like), polytetrafluoroethylene, polyethylene, polypropylene, ethylene-propylene copolymer, polybutadiene, butyl rubber, fluororubber, polyethylene oxide, polyepichlorohydrin, polyphosphagen, polyacrylonitrile, polystyrene, ethylene-propylene-diene copolymer, polyvinylpyridine, chlorosulfonated polyethylene, a polyester resin, a phenol resin, an epoxy resin or the like. The aqueous binder can be used either singly or in combination of two or more types.

From the viewpoint of a binding property, the aqueous binder preferably contains at least one rubber-based binder selected from the group consisting of styrene-butadiene rubber, acrylonitrile-butadiene rubber, methyl methacrylate-butadiene rubber, methyl methacrylate rubber, and rubber obtained by converting at least a part of the methylhydroxy carbonyl groups of methyl methacrylate rubber to carboxylic acid salt. Further, from the viewpoint of having a good binding property, the aqueous binder preferably contains styrene-butadiene rubber (SBR).

The content of the aqueous binder in a binder used for the negative electrode active material layer is preferably 80 to 100% by mass, more preferably 90 to 100% by mass, and further more preferably 100% by mass. Examples of the other binder than the aqueous binder include the binders used for the positive electrode active material layer (organic solvent-based binders) described below.

The amount of the binder contained in the negative electrode active material layer is not particularly limited as long as it is an amount that allows binding of the active material, but would be preferably 1 to 10% by mass, and further preferably 2 to 5% by mass relative to the active material layer. An aqueous binder has high binding strength, and thus can form the active material layer even with addition of a small amount in comparison to an organic solvent-based binder. From this, the content of the aqueous binder in the active material layer is 1 to 3% by mass, preferably 1.2 to 2.7% by mass and more preferably 1.5 to 2.5% by mass relative to the total amount of the negative electrode active material layer. Particularly, when the content of the aqueous binder in the active material layer is less than 1% by mass, it is not preferable from the point that it would be difficult to maintain the binding state of the active material with respect to input vibration. On the other hand, when the content of the aqueous binder in the active material layer exceeds 3% by mass, it is not preferable from the point that there would be fear of cohesive failure of the active material layer. Further, when the content of a hydrophilic binder such as PVdF (an organic solvent-based binder) is increased, the liquid-absorption speed increases, but it is disadvantageous from the viewpoint of the energy density. Further, when the amount of the binder is too much, the resistance of the battery increases. Reversely, when the amount of a binder having high polarity is reduced, the liquid-absorption speed decreases. When the content of a hydrophobic binder (aqueous binder) such as SBR is increased, the liquid-absorption speed decreases. Accordingly, the content of the aqueous binder of the negative electrode active material layer is preferably within the range described above. That is, when the content of the aqueous binder of the negative electrode active material layer is within the range described above, it allows a battery to have homogeneous formation of coating, high energy density and good cycle property.

The negative electrode active material layer further contains a thickening agent having at least a hydroxyl group and an ester group. That is, when the aqueous binder described above is used in the present embodiment, it is necessary to use the thickening agent described below in combination from the viewpoint of improving the coating property.

Examples of the thickening agent include polyvinyl alcohol (average polymerization degree is preferably 200 to 4,000, and more preferably 1,000 to 3,000, and saponification degree is preferably 80% by mol or more, and more preferably 90% by mol or more) and a modified product thereof (1 to 80% by mol saponified product in a vinyl acetate unit of a copolymer with ethylene/vinyl acetate = 2/98 to 30/70 (molar ratio), 1 to 50% by mol partially acetalized product of polyvinyl alcohol, or the like), starch, and a modified product (oxidized starch, phosphoric acid esterified starch, cationized starch, or the like), cellulose derivatives (carboxymethyl cellulose, methyl cellulose, hydroxypropyl cellulose, hydroxyethyl cellulose, and a salt thereof), polyvinylpyrrolidone, polyacrylic acid (salt), polyethylene gylcol, copolymer of (meth)acrylamide and/or (meth)acrylic acid salt [(meth)acrylamide polymer, (meth)acrylamide-(meth) acrylic acid salt copolymer, alkyl (meth) acrylic acid (carbon atom number of 1 to 4) ester- (meth) acrylic acid salt copolymer, or the like], styrene-maleic acid salt copolymer, mannich modified product of polyacrylamide, formalin condensation type resin (urea-formalin resin, melamin-formalin resin or the like), polyamidepolyamine or dialkylamine-epichlorohydrin copolymer, polyethyleneimine, casein, soybean protein, synthetic protein, and a water soluble polymer such as galactomannan derivatives. The aqueous binder can be used either singly or in combination of two or more types.

Examples of a thickening agent that is suitably used in combination with an aqueous binder, particularly styrene-butadiene rubber (SBR) include polyvinyl alcohol and a modified product thereof, starch and a modified product thereof, cellulose derivatives (carboxymethyl cellulose (CMC), methyl cellulose, hydroxyethyl cellulose, and a salt thereof and the like), polyvinyl pyrrolidone, polyacrylic acid (salt), polyethylene glycol, polyethylene oxide and the like. Among them, examples of a thickening agent include at least one kind selected from the group consisting of methyl cellulose, carboxymethyl cellulose and a salt thereof, polyvinyl alcohol, polyacrylic acid and a salt thereof, polyethylene glycol and polyethylene oxide from the viewpoint of electrode strength with respect to vibration and impact during electrode formation, improvement effect for charge and discharge efficiency, thickening effect in a process of producing a negative electrode, formation of a negative electrode active material layer having even and smooth surface, and the like. Particularly, among them, styrene-butadiene rubber (SBR) as an aqueous binder and carboxymethyl cellulose (CMC) as a thickening agent are more preferably combined.

The content of the thickening agent contained in the negative electrode active material layer is 0.5 to 1.5% by mass, more preferably 0.6 to 1.4% by mass, and further preferably 0.7 to 1.3% by mass relative to the total amount of the negative electrode active material layer. Particularly, when the content of the thickening agent in the active material layer is less than 0.5% by mass, it is undesirable in that vibration during electrode formation and electrode strength with respect to impact would be insufficient, and in addition, it would be difficult to sufficiently exhibit thickening effect in a process of producing a negative electrode, and further it would be difficult to make the negative electrode active material layer have an even and smooth surface. Further, it is undesirable in that improvement not only for gas generation in initial charge of the obtained negative electrode, but also for efficiency of charge and discharge would become insufficient, and the like, and it would become difficult to provide a negative electrode having excellent capacity, and the like. On the other hand, when the content of the thickening agent in the active material layer exceeds 1.5% by mass, it is undesirable in that the thickening agent would coat the surface of the active material and the reaction area would decrease, and in addition, it would become difficult to suitably adjust the viscosity of aqueous slurry due to thickening effect by excessive thickening agent, and it would become difficult to obtain a desired negative electrode active material layer, and the like. Further, it is undesirable in that improvement not only for gas generation in initial charge of the obtained negative electrode, but also for efficiency of charge and discharge would become insufficient, and the like, and it would become difficult to provide a negative electrode having excellent capacity, and the like.

The mass content ratio between the aqueous binder and the thickening agent is not particularly limited, but aqueous binder: thickening agent would be 1: 0.1 to 1.0, and preferably 1:0.2 to 0.8. When the mass content ratio between the aqueous binder and the thickening agent is within the range described above, it is preferable from the point of retaining stability of a negative electrode mix paste adjusted in production of a pole plate.

The etherification degree of the thickening agent would be in a range of 0.6 to 1, preferably 0.6 to 0.9, and more preferably 0.6 to 0.85. If the etherification degree of the thickening agent is 0.6 or more, it is preferable from the point that solubility in water or water solution becomes sufficient. On the other hand, when the etherification degree of the thickening agent is 1 or less, it is preferable from the point that an electrode material and a current collector can be strongly bonded. The etherification degree of a thickening agent can be measured as described below. The etherification degree of a thickening agent can be obtained by ashing an anhydride of a sample, adding water and sulfuric acid to this ashed material, and boiling and cooling the mixture, and then reverse-titrating excess acid with sodium hydroxide, and calculating the amount of sulfuric acid consumed in alkali neutralization in the ash.

The weight average molecular weight of the thickening agent would be in a range of 300,000 to 400,000, preferably 310,000 to 390,000, and more preferably 320,000 to 380,000. When the weight average molecular weight of the thickening agent is 300, 000 or higher, it is possible to moderately maintain the viscosity of aqueous slurry when the thickening agent is dissolved in water. As a result thereof, it is advantageous from the point that the thickening agent can be effectively employed as a thickening agent in a step of producing a negative electrode. On the other hand, when the weight average molecular weight of the thickening agent is 400,000 or less, it is possible to effectively perform decompression and defoaming of a paste of a negative electrode mixture. The process of decompression and defoaming is a process of removing residual gas in the paste before coating the mixture paste on a current collector, and when the decompression and defoaming is insufficient, residual small bubbles are manifested on the electrode during the electrode coating, which becomes a defect, and the electrode becomes brittle. Further, it is possible to moderately maintain the viscosity of aqueous slurry when the thickening agent is dissolved in an aqueous solvent such as water without becoming a gel state. As a result thereof, it is advantageous from the point that the thickening agent can be effectively employed as a thickening agent in a step of producing a negative electrode. As a method for measuring the weight average molecular weight of a thickening agent (water-soluble polymer), for example, distribution of the molecular weight of the thickening agent (water-soluble polymer) can be measured by using gel permeation chromatography with a solvent containing a metal-amine complex and/or metal-alkali complex as a mobile phase solvent. From such molecular weight distribution, the weight average molecular weight of the thickening agent (water-soluble polymer) can be calculated. Meanwhile, a method for measuring the weight average molecular weight of a thickening agent (water-soluble polymer) is not limited to the method described above, and the weight average molecular weight can be measured and calculated by an already-known method.

If necessary, the negative electrode active material layer further contains other additives such as a conductive aid, an electrolyte (for example, polymer matrix, ion conductive polymer, and electrolyte solution), and lithium salt for enhancing ion conductivity.

The conductive aid means an additive which is blended in order to enhance the conductivity of the positive electrode active material layer or negative electrode active material layer. As the conductive aid, for example, there can be mentioned carbon black including acetylene black; graphite; and carbon materials such as carbon fiber. When the active material layer contains a conductive aid, an electron network is formed effectively in the inside of the active material layer, and it can contribute to improvement of the output characteristics of a battery.

Examples of the electrolyte salt (lithium salt) include $Li(C_2F_5SO_2)_2N$, $LiPF_6$, $LiBF_4$, $LiClO_4$, $LiAsF_6$, and $LiCF_3SO_3$.

Examples of the ion conductive polymer include polyethylene oxide (PEO)-based and polypropylene oxide (PPO)-based polymer.

A blending ratio of the components that are contained in the negative electrode active material layer and positive electrode active material layer described below is not particularly limited. The blending ratio can be adjusted by suitably referring the already-known knowledge about a lithium ion secondary battery. The thickness of each active material layer is not particularly limited either, and reference can be made to the already-known knowledge about a battery. For example, the thickness of each active material layer is about 2 to 100 $\mu$m.

The present embodiment is characterized in that the negative electrode active material layer satisfies the following Formula (1) :

[Formula 2]

$$0.10 \leq X \leq 1.00 \quad (1)$$

Herein, X in Formula (1) described above is a ratio of a peak intensity of an infrared absorption spectrum derived from a carbonyl group of ester of the negative electrode active material layer to a peak intensity of an infrared absorption spectrum derived from a hydroxyl group of the negative electrode active material layer (C=O peak intensity/-OH peak intensity) . By controlling X to be 0.10 or more in Formula (1), it is possible to remove moisture in the electrode (particularly the negative electrode active material layer), and to reduce the amount of gas generation. That is, the main factor for gas is electrolysis of the -OH group of the thickening agent and residual moisture. Before initial charge, for example, the hydroxyl group of the thickening agent is previously decomposed by subjecting the negative electrode (active material layer) to a heating treatment. At the time, a C=O group is generated by oxidation, and thus the value of (a peak intensity of C=O group)/(a peak intensity of -OH group) becomes an index of the decomposition amount of the hydroxyl group. Further, by carrying out a heating treatment in a degree to generate a carbonyl group of the thickening agent, it is possible to sufficiently remove residual moisture. Further, by controlling X in Formula (1) to be 1.00 or less, it is excellent from the point that it is possible to suppress decrease in the binding strength of the negative electrode active material layer because of excessive decomposition. From such viewpoint, X in Formula (1) is preferably in a range of $0.13 \leq X \leq 0.97$, more preferably in a range of $0.15 \leq X \leq 0.95$, and particularly preferably in a range of $0.20 \leq X \leq 0.90$. Herein, the peak intensity of an infrared absorption spectrum derived from a carbonyl group of ester of the negative electrode active material layer, and the peak intensity of an infrared absorption spectrum derived from a hydroxyl group of the negative electrode active material layer can be measured by measuring intensity based on an arbitrary baseline with respect to each absorption peak, and calculating relative intensity as described in Examples.

In the present embodiment, the density of the negative electrode active material layer is preferably 1.35 to 1.65 g/cm³. Herein, when an aqueous binder is used in a negative electrode active material layer, there is generally a phenomenon that the amount of gas generated during initial charge of a battery increases in comparison to a conventionally used solvent-based binder such as PVdF. In this regard, when the density of the negative electrode active material layer is 1.35 g/cm³ or more, communication property of the active material is ensured, and electron conductivity is sufficiently maintained, and as a result, the battery performance can be further improved. Further, when the density of the negative electrode active material layer is 1.65 g/cm³ or less, generated gas can be sufficiently outgassed from the inside of the power generating element, and a long-term cycle property can be further improved. Further, the density of the negative electrode active material layer falls within the range described above, allowing a battery to have homogeneous formation of coating, high energy density and good cycle property. The density of the negative electrode active material layer is preferably 1.42 to 1.53 g/cm³ from the viewpoint of further exhibiting the effect of the present invention. Meanwhile, the density of the negative electrode active material layer means mass of an active material layer per unit volume. Specifically, after collecting the negative electrode active material layer from a battery and removing the solvent or the like which is present in the electrolyte solution, the electrode volume is obtained from width, length, and height, weight of the active material layer is measured, and the weight is divided by volume to obtain the density.

Furthermore, in the present invention, the average center line roughness (Ra) on a separator-side surface of the negative electrode active material layer is 0.5 to 1.0 μm. When the negative electrode active material layer has average center line roughness (Ra) of 0.5 μm or more, the long-term cycle characteristics can be further improved. It is believed to be due to the reason that, when the surface roughness is 0.5 μm or more, the gas generated within the power generating element can be easily released to outside of the system. Furthermore, when the average center line roughness (Ra) of the negative electrode active material layer is 1.0 μm or less, the electron conductivity in a battery element can be obtained at sufficient level so that the battery characteristics can be further improved.

Herein, the average center line roughness Ra is a value expressed in micrometer (μm) which is obtained by the following Formula 1 (JIS-B0601-1994), when only the reference length in the direction of average line is subtracted from a roughness curve, x axis is taken in the direction of the average line in the subtracted part, y axis is taken in the direction of vertical magnification, and the roughness curve is expressed as y = f(x).

[Formula 1]

$$Ra = \frac{1}{\ell} \int_0^\ell |f(x)| dx$$

Ra value can be measured by using a probe type or a non-contact type surface roughness measurement device that is widely used in general, based on the method described in JIS-B0601-1994 or the like. There is no limitation regarding a manufacturer or mode of the apparatus. For the determination in the present invention, Model No. Dektak3030 made by SLOAN was used, Ra was obtained based on the method prescribed in JIS-B0601. Although the method can be carried out by any one of the contact type (probe type using a diamond needle or the like) and non-contact type (non-contact detection using laser beam or the like), the measurement was carried out in the present invention by the contact type method.

Furthermore, as it can be measured relatively easily, the surface roughness Ra defined in the present invention is measured at a stage in which an active material layer is formed on a current collector during the manufacturing process. However, the measurement can be made even after the completion of a battery, and as it gives almost the same result as that obtained during the production process, it is sufficient that the surface roughness after completion of the battery satisfies the above Ra range. In addition, the surface roughness of a negative electrode active material layer indicates the roughness on a separator side of the negative electrode active material layer.

The surface roughness of a negative electrode can be controlled to be within the aforementioned range by adjusting, for example, the press pressure for forming an active material layer while considering the shape and particle diameter of an active material which is included in the negative electrode active material layer, and blending amount of an active material or the like. The shape of the active material varies depending on the type or production method, or the like. The shape control can be made by crushing or the like. Examples of the shape include a spherical (powder) shape, a plate shape, a needle shape, a column shape, and a prism shape. Thus, considering the shape employed for an active material layer, various active materials can be combined to control the surface roughness.

In addition, the porosity of the negative electrode active material layer would be 25 to 40%, preferably 27 to 39%, and more preferably 30 to 38%. When the porosity of the active material layer is increased, the liquid-absorption speed increases, but reversely it would be disadvantageous from the viewpoint of the energy density. Further, too high porosity of the active material layer may have influence on cycle life-time. Accordingly, when the porosity of the negative electrode active material layer is controlled within the range described above, a surface coating is formed uniformly in initial charge process, and the battery having a good energy density and a good cycle property would be obtained. Meanwhile, as for the porosity of an active material layer, a value obtained as a volume ratio from the density of a raw material of an active material layer and the density of an active material layer as a final product is used. For example, when the density of a raw material is $\rho$ and volume density of an active material layer is $\rho'$, it is described as follows: porosity of active material layer = $100 \times (1-\rho'/\rho)$.

(Method of producing negative electrode)

In addition, the negative electrode of the present embodiment is preferably produced with a heating treatment as described above. That is, a solid content containing a negative electrode active material, an aqueous binder, and a thickening agent having a hydroxyl group and an ester group in the mass composition ratio described above is prepared. To this solid content, an aqueous solvent (preferably ion exchanged water), which is a solvent for adjusting the slurry viscosity, is added in a suitable amount, to produce a negative electrode slurry. Next, this negative electrode slurry is coated on both surfaces of a negative electrode current collector (for example, a copper foil) and subjected to drying and pressing. Then, in the present embodiment, preferably a heating treatment would be carried out for 4 to 48 hours, preferably 5 to 24 hours and more preferably 6 to 12 hours at a temperature of 90 to 250°C, preferably 100 to 200°C and more preferably 100 to 180°C under the air, under vacuum atmosphere or inert atmosphere, whereby to produce (complete) a negative electrode. By controlling X in Formula (1) to be 0.10 or more by such heating treatment, it is possible to remove moisture in the electrode (particularly the negative electrode active material layer), and reduce the amount of gas generation. A main factor for gas is electrolysis of the -OH group of the thickening agent and residual moisture. By subjecting the negative electrode after the drying and pressing to the heating treatment before initial charge, the hydroxyl group of the thickening agent is previously decomposed. At the time, a C=O group is generated by oxidation, and the value of (a peak intensity of C=O group)/(a peak intensity of -OH group) becomes an index of the decomposition amount of the hydroxyl group. Further, by carrying out the heating treatment in a degree to generate a carbonyl group of the thickening agent, it is possible to sufficiently remove residual moisture. Further, by controlling X in Formula (1) to be 1.00 or less, it is excellent from the point that it is possible to suppress decrease in the binding strength because of excessive decomposition of the negative electrode active material layer. Further, the heating treatment may be carried out under any one of the air, vacuum atmosphere and inert atmosphere, but preferably performed under vacuum atmosphere because moisture is effectively removed. Meanwhile, the heating treatment may be encompassed in the drying process during the process of producing a negative electrode. That is, by loading the heating treatment condition in the drying process, it is possible to accomplish similar effects.

[Positive electrode]

(Positive electrode current collector)

A material forming a positive electrode current collector is not particularly limited, but metal is preferably used.

Specifically, examples of the metal include aluminum, nickel, iron, stainless steel, titanium, copper, other alloys and the like. In addition to them, a clad material of nickel and aluminum, a clad material of copper and aluminum, or a plating material of a combination of those metals and the like can be preferably used. Further, it can be also a foil obtained by coating aluminum on a metal surface. Among them, from the viewpoint of electron conductivity or potential for operating a battery, aluminum, stainless steel and copper are preferable.

The size of the positive electrode current collector is determined based on use of a battery use. For example, when it is used for a large-size battery which requires high energy density, a current collector with large area is used. The thickness of the current collector is not particularly limited, either. The thickness of the current collector is generally about 1 to 100 $\mu$m. Meanwhile, for a current collector for a bipolar type electrode, the negative electrode current collector or the positive electrode current collector described above can be suitably employed. Particularly, stainless steel and the like that can endure positive electrode potentials and negative electrode potentials, a clad material having a positive electrode current collector material at the side of the positive electrode and having a negative electrode current collector material at the side of the negative electrode, those obtained by plating or coating a negative electrode current collector material on one surface of the positive electrode current collector, those obtained by plating or coating a positive electrode current collector material on one surface of the negative electrode current collector, and the like are preferable.

(Positive electrode active material layer)

The positive electrode active material layer contains an active material, and if necessary, it further contains other additives such as a conductive aid, a binder, an electrolyte (for example, polymer matrix, ion conductive polymer, and electrolyte solution), and lithium salt for enhancing ion conductivity.

The positive electrode active material layer contains a positive electrode active material. Examples of the positive electrode active material include a lithium-transition metal composite oxide such as $LiMn_2O_4$, $LiCoO_2$, $LiNiO_2$, $Li(Ni-Mn-CoO_2$, or a compound in which part of the transition metals is replaced with other element, a lithium-transition metal phosphate compound, and a lithium-transition metal sulfate compound. Depending on the case, two or more kinds of a positive electrode active material can be used in combination. As a preferred example, a lithium-transition metal composite oxide is used as a positive electrode active material from the viewpoint of capacity and output characteristics. In some cases, two or more types of the positive electrode active material may be used in combination. Lithium-transition metal complex oxide is preferably used as a positive electrode active material from the viewpoint of capacity and output property. As a more preferred example, $Li(Ni-Mn-Co)O_2$ and a compound in which part of the transition metals is replaced with other element (hereinbelow, also simply referred to as the "NMC composite oxide") are used. The NMC composite oxide has a layered crystal structure in which a lithium atom layer and a transition metal (Mn, Ni, and Co are arranged with regularity) atom layer are alternately stacked via an oxygen atom layer, one Li atom is included per atom of transition metal M and extractable Li amount is twice the amount of spinel lithium manganese oxide, that is, as the supply power is two times higher, it can have high capacity.

As described above, the NMC composite oxide includes a composite oxide in which part of transition metal elements are replaced with other metal element. In that case, examples of other element include Ti, Zr, Nb, W, P, Al, Mg, V, Ca, Sr, Cr, Fe, B, Ga, In, Si, Mo, Y, Sn, V, Cu, Ag, and Zn. Preferably, it is Ti, Zr, Nb, W, P, Al, Mg, V, Ca, Sr, or Cr. More preferably, it is Ti, Zr, P, Al, Mg, or Cr. From the viewpoint of improving the cycle characteristics, it is even more preferably Ti, Zr, Al, Mg, or Cr.

Because of high theoretical discharge capacity, the NMC composite oxide preferably has a composition represented by General Formula (1) : $Li_aNi_bMn_cCo_dM_xO_2$ (with the proviso that, in the formula, a, b, c, d, and x satisfy $0.9 \leq a \leq 1.2$, $0 < b < 1$, $0 < c \leq 0.5$, $0 < d \leq 0.5$, $0 \leq x \leq 0.3$, and b + c + d = 1. M represents at least one element selected from Ti, Zr, Nb, W, P, Al, Mg, V, Ca, Sr, and Cr) . Herein, a represents the atomic ratio of Li, b represents the atomic ratio of Ni, c represents the atomic ratio of Mn, d represents the atomic ratio of Co, and x represents the atomic ratio of M. From the viewpoint of the cycle characteristics, it is preferable that $0.4 \leq b \leq 0.6$ in General Formula (1) . Meanwhile, composition of each element can be measured by induction coupled plasma (ICP) spectroscopy.

In general, from the viewpoint of improving purity and improving electron conductivity of a material, nickel (Ni), cobalt (Co) and manganese (Mn) are known to contribute to capacity and output characteristics. Ti or the like replaces part of transition metal in a crystal lattice. From the viewpoint of the cycle characteristics, it is preferable that part of transition element are replaced by other metal element, and it is preferable that $0 < x \leq 0.3$ in General Formula (1), in particular. By dissolving at least one selected from the group consisting of Ti, Zr, Nb, W, P, Al, Mg, V, Ca, Sr and Cr, the crystal structure is stabilized so that a decrease in capacity of a battery is prevented even after repeated charge and discharge, and thus, it is believed that excellent cycle characteristics can be achieved.

As a more preferred embodiment, b, c, and d in General Formula (1) satisfy $0.44 \leq b \leq 0.51$, $0.27 \leq c \leq 0.31$, and $0.19 \leq d \leq 0.26$ from the viewpoint of having excellent balance between capacity and durability.

Meanwhile, it is needless to say that a positive electrode active material other than those described above can be also used.

The average particle diameter of each active material which is contained in the positive electrode active material layer is, although not particularly limited, preferably 1 to 100 $\mu$m, and more preferably 1 to 20 $\mu$m from the viewpoint of having high output.

A binder used for the positive electrode active material layer is not particularly limited and the following materials can be mentioned; thermoplastic polymers such as polyethylene, polypropylene, polyethylene terephthalate (PET), polyether nitrile, polyacrylonitrile, polyimide, polyamide, cellulose, carboxymethyl cellulose (CMC) and a salt thereof, an ethylene-vinyl acetate copolymer, polyvinyl chloride, styrene-butadiene rubber (SBR), isoprene rubber, butadiene rubber, ethylene-propylene rubber, an ethylene-propylene-diene copolymer, a styrene-butadiene-styrene block copolymer and a hydrogenated product thereof, and a styrene-isoprene-styrene block copolymer and a hydrogenated product thereof, fluorine resins such as polyvinylidene fluoride (PVdF), polytetrafluoroethylene (PTFE), a tetrafluoroethylene-hexafluoropropylene copolymer (FEP), a tetrafluoroethylene-perfluoroalkyl vinyl ether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF), vinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TEF-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFT-TFE-based fluorine rubber), vinylidene fluoride-perfluorornethyl vinyl ether-tetrafluoroethylene-based fluorine rubber (VDF-PFMVE-TFE-based fluorine rubber), and vinylidene fluoride-chlorotrifluoroethylene fluorine-based fluorine rubber (VDF-CTFE-based fluorine rubber), an epoxy resin, and the like. These binders may be each used singly, or two or more thereof may be used in combination.

The amount of the binder contained in the positive electrode active material layer is not particularly limited as long as the binder can bind the active material. However, the amount of binder is preferably 0.5 to 15% by mass, more preferably 1 to 10% by mass, and still more preferably 1 to 5% by mass relative to the electrode active material layer. Although a binder such as hydrophilic PVdF (organic solvent-based binder) can cause increased liquid absorption speed as the content of the binder increases, it is disadvantageous in terms of energy density. Furthermore, an excessively large binder amount yields increased battery resistance. Reversely, if the amount of a binder having high polarity is reduced, liquid-absorption speed decreases. If the content of a hydrophobic binder (aqueous binder) such as SBR is increased, the liquid-absorption speed decreases. Accordingly, the content of the binder in the positive electrode active material layer is preferably within the range described above. That is, when the content of the binder in the positive electrode active material layer is controlled within the range described above, a battery to have homogeneous formation of coating, high energy density and good cycle property is obtained.

As for additives other than the binder, those described in the above section of the negative electrode active material layer can be similarly used.

In addition, the porosity of the positive electrode active material layer would be 20 to 30%, preferably 21 to 29%, and more preferably 22 to 28% . When the porosity of the active material layer is increased, the liquid-absorption speed increases, but reversely it would be disadvantageous from the viewpoint of the energy density. Further, too high porosity of the active material layer might have influence on cycle life-time. Accordingly, when the porosity of the positive electrode active material layer is controlled within the range described above, a surface coating in initial charge process is formed uniformly, and the battery having a good energy density and a good cycle property would be obtained.

[Electrolyte Layer]

(Separator)

A separator has an activity of maintaining an electrolyte to ensure lithium ion conductivity between a positive electrode and a negative electrode and also a function of a partition wall between a positive electrode and negative electrode.

Herein, in order to improve further the property of releasing the gas generated during initial charge of battery from the power generating element, it is also preferable to consider the property of releasing the gas which reaches the separator after discharged from the negative electrode active material layer. From this point of view, it is more preferable that the air permeability or porosity of the separator is adjusted to a suitable range.

Specifically, the air permeability (Gurley value) of the separator is preferably 200 (second/100cc) or less. As the air permeability (Gurley value) of the separator is preferably 200 (second/100cc) or less, the release of the generated gas is improved so that the battery can have good capacity retention rate after cycles and can have sufficient short-circuit preventing property and also sufficient mechanical properties as a function of the separator. Although the lower limit of the air permeability is not particularly limited, it would be generally 300 (second/100cc) or more. The air permeability of the separator is a value measured by the method of JIS P8117 (2009).

Furthermore, the porosity of the separator would be 40 to 65%, preferably 45 to 60%, and more preferably 50 to 60%. As the porosity of the separator is 40 to 65%, the releasing property of the generated gas is improved so that the battery can have good long-term cycle characteristics and can have sufficient short-circuit preventing property and also sufficient mechanical properties as a function of the separator. Meanwhile, as for the porosity, a value obtained as a volume ratio from the density of a raw material resin of a separator and the density of a separator as a final product is used. For example, when the density of a raw material resin is $\rho$ and volume density of a separator is $\rho'$, it is described as follows: porosity = $100 \times (1-\rho'/\rho)$.

Examples of a separator shape include a porous sheet separator or a non-woven separator composed of a polymer or a fiber which absorbs and maintains the electrolyte.

As a porous sheet separator composed of a polymer or a fiber, a microporous (microporous membrane) separator can be used, for example. Specific examples of the porous sheet composed of a polymer or a fiber include a microporous (microporous membrane) separator which is composed of polyolefin such as polyethylene (PE) and polypropylene (PP) ; a laminate in which plural of them are laminated (for example, a laminate with three-layer structure of PP/PE/PP), and a hydrocarbon based resin such as polyimide, aramid, or polyfluorovinylydene-hexafluoropropylene (PVdF-HFP), or glass fiber.

The thickness of the microporous (microporous membrane) separator cannot be uniformly defined as it varies depending on use of application. For example, for an application in a secondary battery for operating a motor of an electric vehicle (EV), a hybrid electric vehicle (HEV), and a fuel cell vehicle (FCV), it is preferably 4 to 60 $\mu$m as a monolayer or a multilayer. Fine pore diameter of the microporous (microporous membrane) separator is preferably 1 $\mu$m or less at most (in general, the pore diameter is about several tens of nanometer).

As a non-woven separator, conventionally known ones such as cotton, rayon, acetate, nylon, polyester; polyolefin such as PP and PE; polyimide and aramid are used either singly or as a mixture. Furthermore, the volume density of a non-woven fabric is not particularly limited as long as sufficient battery characteristics are obtained with an impregnated polymer gel electrolyte.

The porosity of a separator composed of non-woven fabric would be 50 to 90%, preferably 55 to 85% and more preferably 60 to 80%. Furthermore, the thickness of a separator composed of non-woven fabric can be the same as the thickness of an electrolyte layer, and it is preferably 5 to 200 $\mu$m and particularly preferably 10 to 100 $\mu$m.

Herein, the separator can be a separator having a heat resistant insulating layer laminated on at least one surface of a porous resin substrate (separator composed of microporous membrane or non-woven fabric). The heat resistant insulating layer is a ceramic layer containing inorganic particles and a binder. By having a heat resistant insulating layer, internal stress in a separator which increases under temperature increase is alleviated so that the effect of inhibiting thermal shrinkage can be obtained. Furthermore, by having a heat resistant insulating layer, mechanical strength of a separator having a heat resistant insulating layer is improved so that the separator hardly has a film breaking. Furthermore, because of the effect of inhibiting thermal shrinkage and a high level of mechanical strength, the separator is hardly curled during the process of fabricating an electric device. Furthermore, the ceramic layer can also function as a means for releasing gas to improve the property of releasing the gas from the power generating element, and therefor desirable.

Furthermore, in the present invention, the average center line roughness (Ra) on a surface of a negative electrode active material layer side of a separator having a heat resistant insulating layer would be 0.1 to 1.2 $\mu$m, preferably 0.2 to 1.1 $\mu$m and more preferably 0.25 to 0.9 $\mu$m. Furthermore, when the average center line roughness (Ra) on a surface of the heat resistant insulating layer of a separator is 0.1 $\mu$m or more, in addition to being effective for preventing distortion between the electrode and separator during manufacturing a battery, the long-term cycle characteristics can be further improved. It is believed to be due to the reason that, when the surface roughness is 0.1 $\mu$m or more, the gas generated within the power generating element can be easily released to outside of the system. Furthermore, when the average center line roughness (Ra) on a surface of the heat resistant insulating layer of a separator is 1.2 $\mu$m or less, local thickness deviation of the separator can be suppressed so that the ion conductivity becomes even in the plane. As a result, the battery characteristics can be further improved. Meanwhile, as the average center line roughness Ra is the same as the average center line roughness (Ra) of the negative electrode active material layer described above, explanations therefor are omitted herein.

As described above, the separator also contains an electrolyte. The electrolyte is not particularly limited as long as it can exhibit those functions, and a liquid electrolyte or a gel polymer electrolyte is used.

The liquid electrolyte has an activity of a lithium ion carrier. The liquid electrolyte has the form in which lithium salt is dissolved in an organic solvent. Examples of the organic solvent which can be used include carbonates such as ethylene carbonate (EC), propylene carbonate (PC), dimethyl carbonate (DMC), diethyl carbonate (DEC), and ethylmethyl carbonate. Furthermore, as a lithium salt, the compound which can be added to an active material layer of an electrode such as $Li(CF_3SO_2)_2N$, $Li(C_2F_5SO_2)_2N$, $LiPF_6$, $LiBF_4$, $LiClO_4$, $LiAsF_6$, $LiTaF_6$, and $LiCF_3SO_3$ can be similarly used. The liquid electrolyte may further contain an additive in addition to the components that are described above. Specific examples of the compound include vinylene carbonate, methylvinylene carbonate, dimethylvinylene carbonate, phenylvinylene carbonate, diphenylvinylene carbonate, ethylvinylene carbonate, diethylvinylene carbonate, vinylethylene carbonate, 1,2-divinylethylene carbonate, 1-methyl-1-vinylethylene carbonate, 1-methyl-2-vinylethylene carbonate, 1-ethyl-1-vinylethylene carbonate, 1-ethyl-2-vinylethylene carbonate, vinylvinylene carbonate, allylethylene carbonate, vinyloxymethylethylene carbonate, allyloxymethylethylene carbonate, acryloxymethylethylene carbonate, methacryloxymethylethylene carbonate, ethynylethylene carbonate, propargylethylene carbonate, ethynyloxymethylethylene carbonate, propargyloxyethylene carbonate, methylene ethylene carbonate, and 1,1-dimethyl-2-methyleneethylene carbonate. Among them, vinylene carbonate, methylvinylene carbonate, and vinylethylene carbonate are preferable. Vinylene carbonate and vinylethylene carbonate are more preferable. Those cyclic carbonate esters may be used either singly or in combination of two or more types.

The gel polymer electrolyte has a constitution that the aforementioned liquid electrolyte is injected to a matrix polymer (host polymer) consisting of an ion conductive polymer. Using a gel polymer electrolyte as an electrolyte is excellent in that the fluidity of an electrolyte disappears and ion conductivity between each layer is blocked. Examples of an ion conductive polymer which is used as a matrix polymer (host polymer) include polyethylene oxide (PEO), polypropylene oxide (PPO), and a copolymer thereof. An electrolyte salt such as lithium salt can be dissolved well in those polyalkylene oxide polymers.

The matrix polymer of a gel electrolyte can exhibit excellent mechanical strength by forming of a cross-linked structure. For forming a cross-linked structure, it is sufficient to perform a polymerization treatment of a polymerizable polymer for forming a polymer electrolyte (for example, PEO and PPO), such as thermal polymerization, UV polymerization, radiation polymerization, and electron beam polymerization, by using a suitable polymerization initiator.

[Positive electrode current collecting plate and negative electrode current collecting plate]

The material for forming the current collecting plate (25, 27) is not particularly limited, and a known highly conductive material which has been conventionally used for a current collecting plate for a lithium ion secondary battery can be used. Preferred examples of the material for forming a current collecting plate include metal material such as aluminum, copper, titanium, nickel, stainless steel (SUS) and an alloy thereof. From the viewpoint of light weightiness, resistance to corrosion, and high conductivity, aluminum and copper are preferable. Aluminum is particularly preferable. Meanwhile, the same material or a different material can be used for the positive electrode current collecting plate 25 and the negative electrode current collecting plate 27.

[Positive electrode lead and negative electrode lead]

Further, although it is not illustrated, the current collector (11, 12) and the current collecting plate (25, 27) can be electrically connected to each other via a positive electrode lead or a negative electrode lead. The same material used for a lithium ion secondary battery of a related art can be also used as a material for forming a positive electrode lead and a negative electrode lead. Meanwhile, a portion led out from a casing is preferably coated with a heat resistant and insulating thermally shrunken tube or the like so that it has no influence on a product (for example, an automobile component, in particular, an electronic device or the like) by electric leak after contact with neighboring instruments or wirings.

[Battery outer casing]

As for the battery outer casing 28, an envelope-shaped casing to cover a power generating element, in which a laminate film including aluminum is contained, can be used as a member for enclosing a power generating element within it. As for the laminate film, a laminate film with a three-layer structure formed by laminating PP, aluminum and nylon in order can be used, but not limited thereto. From the viewpoint of having high output and excellent cooling performance, and of being suitably usable for a battery for a large instrument such as EV or HEV, a laminate film is preferable. Furthermore, as the group pressure applied from outside to a power generating element can be easily controlled and a battery with large size can be provided, a power generating element with laminated structure and a laminate film containing aluminum for an outer casing is more preferred.

The internal volume of the battery outer casing 28 is designed to be larger than the volume of the power generating element 21 such that it can enclose the power generating element 21. Herein, the internal volume of an outer casing indicates the volume inside an outer casing before performing a vacuum treatment after sealing the outer casing. Furthermore, the volume of the power generating element means the volume which is spatially taken by the power generating element, and it include the pore part in the power generating element. As the internal volume of an outer casing is larger than the volume of the power generating element, a space for collecting gas at the time of gas generation can be present. Accordingly, the gas release property from the power generating element is enhanced and it is less likely that the battery behavior is affected by the generated gas, and therefore the battery characteristics are improved.

Furthermore, in this embodiment, it is preferable to have a constitution such that the ratio value ($L/V_1$) of the volume L of the electrolyte solution injected to the outer casing to the volume $V_1$ of pores present in the power generating element 21 is in the range of 1.2 to 1.6. When the amount of an electrolyte solution (volume L) is large, a sufficient amount of an electrolyte solution is present also on the negative electrode side even when an electrolyte solution is localized on the positive electrode side, for example, and thus it is advantageous from the viewpoint of having even forming of a surface coating film on both electrodes. Meanwhile, if the electrolyte solution (volume L) is large, the cost would increase due to increased electrolyte solution, and excessive electrolyte solution leads to a wider distance between the electrodes, and as a result, the battery resistance would be increased. Therefore, the $L/V_1$ value, which is the ratio of the volume L of the electrolyte solution to the volume $V_1$ of pores present in the power generating element 21, is controlled within the range described above, as a result, it is excellent in that even film forming, cost, and cell resistance can be achieved. From the point of view, $L/V_1$ value described above is more preferably in range of 1.25 to 1.55, and particularly preferably 1.3 to 1.5.

Furthermore, in this embodiment, it is preferable to have a constitution such that the ratio value ($V_2/V_1$) of the volume $V_2$ of a surplus space (Symbol 29 in Fig. 1) inside the battery outer casing 28 to the volume $V_1$ of the pores present in the power generating element 21 is 0.5 to 1.0. It is also preferable to have a constitution such that the ratio ($L/V_2$) value which is the ratio of the volume L of the electrolyte solution injected to an outer casing relative to the volume $V_2$ of a surplus space inside the outer casing is 0.4 to 0.7. Accordingly, among the electrolyte solution injected to the inside of an outer casing, the electrolyte solution not absorbed by the binder can be surely present in the aforementioned surplus space. In addition, movement of lithium ions can be surely guaranteed inside the battery. As a result, an occurrence of an uneven reaction accompanied with the increased distance between electrode plates, which is caused by the presence of extra electrolyte solution as a possible problem when the electrolyte solution is used in the same large amount as the solvent-based binder such as PVdF, is prevented. Accordingly, a non-aqueous electrolyte secondary battery having excellent long-term cycle characteristics (service life characteristics) can be provided.

Herein, the "pore volume ($V_1$) in the power generating element" can be calculated as total of pores that are present in each member constituting the power generating element. Furthermore, the battery can be manufactured by injecting an electrolyte solution after enclosing power generating element in an outer casing and then sealing it with creating vacuum inside the outer casing. When gas is generated from the inside of an outer casing in this state, if there is a space for holding the generated gas inside an outer casing, the generated gas is concentrated in that space, yielding a swollen outer casing. In the specification, this space is defined as a "surplus space", and the volume of a surplus space when the outer casing is swollen at maximum level without burst is defined as $V_2$. As described above, the value of $V_2/V_1$ is preferably 0.5 to 1.0, more preferably 0.6 to 0.9, and particularly preferably 0.7 to 0.8.

Furthermore, as described above, the ratio value of the volume of injected electrolyte solution to the volume of the aforementioned surplus space is controlled within a pre-determined range in the present invention. Specifically, the ratio ($L/V_2$) value which is the ratio of the volume L of the electrolyte solution injected to an outer casing relative to the volume $V_2$ of a surplus space inside the outer casing is preferably controlled to 0.4 to 0.7. $L/V_2$ value is more preferably 0.45 to 0.65, and particularly preferably 0.5 to 0.6.

Meanwhile, in this embodiment, it is preferable that the aforementioned surplus space which is present inside the outer casing is disposed at least vertically above the power generating element. By having this constitution, the generated gas can be concentrated at a site vertically above the power generating element in which a surplus space is present. Accordingly, compared to a case in which a surplus space is present in a lateral part or a bottom part of the power generating element, the electrolyte solution can be firstly present in a bottom part in which the power generating element is present inside the outer casing. As a result, a state in which the power generating element is constantly soaked in as large amount of electrolyte solution as possible can be obtained, and thus lowered battery performance accompanied with liquid depletion can be suppressed to a minimum level. Meanwhile, although there is no specific limitation on the constitution to have a surplus space present vertically above the power generating element, for example, it is possible that the material or shape of an outer casing itself is constituted such that no swelling occurs toward the lateral part or bottom part of the power generating element, or a member for preventing the swelling of an outer casing toward the lateral part or bottom part can be disposed on the outside of an outer casing.

For an application for an automobile or the like, a battery with large size is required in these days. Furthermore, the effect of the present invention, that is, suppressing gas generation effectively, is exhibited more effectively for a large-area battery in which the amount of gas generation is large. Furthermore, the effect of preventing uneven forming of a coating film (SEI) on a surface of the negative electrode active material as described above is more effectively exhibited for a large-area battery in which the coating film (SEI) is formed in a large amount on a surface of the negative electrode active material. Furthermore, for a case in which an aqueous binder is used for a negative electrode active material layer, by lowering the friction coefficient between the negative electrode active material layer and the separator compared to a certain value, the effect of suitably lowering the adhesiveness between the electrode and the separator when electrode is not in proper position is more effectively exhibited for a battery with large area. Namely, in case of a battery with large area, the disruption in aggregation is further suppressed in an electrode surface which is caused by a friction between the electrode and separator, and thus it is favorable in that the battery characteristics are maintained even when vibration is applied. Thus, in this embodiment, a battery structure having a power generating element covered with an outer casing preferably has large size from the viewpoint of better exhibition of the effect of the embodiment. Specifically, it is preferable that the negative electrode active material layer has a rectangular shape in which the short side length is 100 mm or more. Such battery with large size can be used for an application in automobile. Herein, the short side length of a negative electrode active material layer indicates the length of the shortest side in each electrode. Herein, the upper limit of the length of the short side is, although not particularly limited, generally 250 mm or less.

It is also possible to determine the large size of a battery in view of a relationship between battery area or battery capacity, from the viewpoint of a large-size battery, which is different from a physical size of an electrode. For example, in the case of a flat and stack type laminate battery, the ratio value of a battery area (projected area of a battery including an outer casing of the battery) to rated capacity is 5 $cm^2$/Ah or more, and for a battery with rated capacity of 3 Ah or more, the battery area per unit capacity is large so that it is difficult to remove the gas generated between the electrodes. Due to an occurrence of such gas, if a gas retention part is present between large-size electrodes, in particular, an uneven reaction may occur more easily by having that part as a start point. For such reasons, a problem of having lowered battery characteristics (in particular, service life characteristics after long-term cycle) may become more significant for a large-size battery in which an aqueous binder such as SBR is used for forming a negative electrode active material layer. The non-aqueous electrolyte secondary battery according to this embodiment is preferably a large-size battery as described above from the viewpoint of having a larger merit by exhibition of the working effects of the present invention. Furthermore, the aspect ratio of a rectangular electrode is preferably 1 to 3, and more preferably 1 to 2. Meanwhile, the aspect ratio of an electrode is defined by a horizontal to vertical ratio of the positive electrode active material layer with a rectangular shape. By having the aspect ratio in this range, an advantage of further suppressing an occurrence of uneven film can be obtained according to the present invention in which use of an aqueous binder is essential, as the gas can be evenly released in plane direction.

The rated capacity of a battery is obtained as described below.

<<Measurement of rated capacity>>

For measurement of rated capacity, a battery for test was injected with an electrolyte solution, allowed to stand for 10 hours or so, and subjected to initial charge. After that, the measurement was carried out according to the following step 1 to 5 at temperature of 25°C, in the voltage range of 3.0 V to 4.15 V.

Step 1: After reaching 4.15 V by constant current charge at 0.2 C, it was rested for 5 minutes.

Step 2: After Step 1, it was charged for 1.5 hours by constant voltage charge followed by resting for 5 minutes.

Step 3: After reaching 3.0 V by constant current discharge at 0.2 C, it was discharged for 2 hours by constant voltage discharge followed by resting for 10 seconds.

Step 4: After reaching 4.1 V by constant current charge at 0.2 C, it was charged for 2.5 hours by constant voltage charge followed by resting for 10 seconds.

Step 5: After reaching 3.0 V by constant current discharge at 0.2 C, it was discharged for 2 hours by constant voltage discharge followed by resting for 10 seconds.

Rated capacity: The discharge capacity (CCCV discharge capacity) from the constant current discharge to constant voltage discharge of Step 5 is used as rated capacity.

[Group pressure applied on power generating element]

In the present embodiment, the group pressure applied on the power generating element is preferably 0.07 to 0.7 kgf/cm$^2$ (6.86 to 68.6 kPa). By applying pressure to a power generating element so that the group pressure is 0.07 to 0.7 kgf/cm$^2$, uneven increase in distance between electrode plates can be prevented and it is also possible to ensure sufficient movement of lithium ions between electrode plates. In addition, the gas which is generated according to the battery reaction can be released better to an outside of the system, and also as extra electrolyte solution in the battery does not much remain between the electrodes, and thus an increase in cell resistance can be suppressed. In addition, as the battery swelling is suppressed, good cell resistance and capacity retention rate after long-term cycle are obtained. More preferably, the group pressure applied to the power generating element is 0.1 to 0.7 kgf/cm$^2$ (9.80 to 68.6 kPa). Herein, the group pressure indicates an external force applied to a power generating element. The group pressure applied to a power generating element can be easily measured by using a film type pressure distribution measurement system. In the present specification, the value measured by using the film type pressure distribution measurement system manufactured by Takscan is used.

Although it is not particularly limited, control of the group pressure can be made by applying directly or indirectly external force to a power generating element by physical means, and controlling the external force. As for the method for applying external force, it is preferable to use a pressure member which can apply pressure on an outer casing. Namely, one preferred embodiment of the present invention is a non-aqueous electrolyte secondary battery which further has a pressure member for applying pressure on an outer casing such that the group pressure applied on the power generating element is 0.07 to 0.7 kgf/cm$^2$.

Fig. 2 (a) is a top view of a non-aqueous electrolyte lithium ion secondary battery as one preferred embodiment of the present invention and Fig. 2(b) is a diagram seen from the arrow direction of A in Fig. 2(a). The outer casing having the enclosed power generating element 1 has a flat rectangular shape, and the electrode tab 4 is drawn from the lateral side of the outer casing for extracting electric power. The power generating element is covered by the battery outer casing with its periphery fused by heat. The power generating element is sealed in a state in which the electrode tab is led to the outside. Herein, the power generating element corresponds to the power generating element 21 of the lithium ion secondary battery 10 illustrated in Fig. 1 as described above. In Figs. 2, 2 represents a SUS plate as a pressure member, 3 represents a fixing jig as a fixing member, and 4 represents an electrode tab (negative electrode tab or positive electrode tab). The pressure member is disposed for the purpose of controlling the group pressure applied to power generating element to 0.07 to 0.7 kgf/cm$^2$. Examples of the pressure member include a rubber material such as urethane rubber sheet, a metal plate such as aluminum and SUS, and a resin plate such as Bakelite and Teflon (registered trademark). Furthermore, from the viewpoint of having continuous application of constant pressure on a power generating element by a pressure member, it is preferable to have additionally a fixing means for fixing a pressure member. Furthermore, by controlling the fixing of a fixing jig onto a pressure member, the group pressure applied to a power generating element can be easily controlled.

Meanwhile, drawing of the tab illustrated in Figs. 2 is not particularly limited, either. The positive electrode tab and the negative electrode tab may be drawn from two lateral sides, or each of the positive electrode tab and negative electrode tab may be divided into plural tabs and drawn from each side, and thus it is not limited to the embodiment illustrated in Figs. 2.

In addition, in the present embodiment, $Tc/Ta$, in which $Tc$ is soaking time of the electrolyte solution into the positive electrode active material layer and $Ta$ is soaking time of the electrolyte solution into the negative electrode active material layer, is preferably in a range of 0.6 to 1.3. When the aqueous binder and the thickening agent are used in the negative electrode active material layer, it is possible to improve wettability of the positive and negative electrode active material layers, and maintain and improve the battery properties (long-term cycle property) by controlling the ratio of liquid-absorption (soaking) speeds of the electrolyte solution into the positive and negative electrode active material layers within the proper range. From such a viewpoint, the $Tc/Ta$ is preferably in a range of 0.8 to 1.2 and more preferably in a range of 0.7 to 1.1.

The measurement of soaking time of an electrolyte solution to the positive electrode active material layer and negative electrode active material layer can be performed according to the following method. Specifically, as for the $Tc$ as soak-in time of the electrolyte solution into the positive electrode active material layer, 1 μl of propylene carbonate (PC) is added dropwise on center part of the surface of a positive electrode active material layer, and the time at which it is completely absorbed into the active material layer is used (determined by naked eye) . For example, the one having the same composition as the electrolyte solution used for a non-aqueous electrolyte secondary battery can be used. However, as a volatile component is contained, it is difficult to determine whether the electrolyte solution is removed by evaporation or it is lost from a surface due to soaking into an active material layer. For such reasons, the soak-in time of hardly volatile PC is employed as the soak-in time $Tc$ of an electrolyte solution into the positive electrode active material layer. Similarly, as for the $Ta$ as soak-in time of the electrolyte solution into the negative electrode active material layer, the soak-in time of PC is also used.

[Assembled battery]

An assembled battery is formed by connecting plural batteries. Specifically, at least two of them are used in series, in parallel, or in series and parallel. According to arrangement in series or parallel, it becomes possible to freely control the capacity and voltage.

It is also possible to form a detachable small-size assembled battery by connecting plural batteries in series or in parallel. Furthermore, by connecting again plural detachable small-size assembled batteries in series or parallel, an assembled battery having high capacity and high output, which is suitable for a power source for operating a vehicle requiring high volume energy density and high volume output density or an auxiliary power source, can be formed. The number of the connected batteries for fabricating an assembled battery or the number of the stacks of a small-size assembled battery for fabricating an assembled battery with high capacity can be determined depending on the capacity or output of a battery of a vehicle (electric vehicle) for which the battery is loaded.

[Vehicle]

The electric device has excellent output characteristics and can maintain discharge capacity even when it is used for a long period of time, and thus has good cycle characteristics. For use in a vehicle such as an electric vehicle, a hybrid electric vehicle, a fuel cell electric vehicle, or a hybrid fuel cell electric vehicle, long service life is required as well as high capacity and large size compared to use for an electric and mobile electronic device. The electric device can be preferably used as a power source for a vehicle, for example, as a power source for operating a vehicle or as an auxiliary power source.

Specifically, the battery or an assembled battery formed by combining plural batteries can be mounted on a vehicle. According to the present invention, a battery with excellent long term reliability, output characteristics, and long service life can be formed, and thus, by mounting this battery, a plug-in hybrid electric vehicle with long EV driving distance and an electric vehicle with long driving distance per charge can be achieved. That is because, when the battery or an assembled battery formed by combining plural batteries is used for, for example, a vehicle such as hybrid car, fuel cell electric car, and electric car (including two-wheel vehicle (motor bike) or three-wheel vehicle in addition to all four-wheel vehicles (automobile, truck, commercial vehicle such as bus, compact car, or the like)), a vehicle with long service life and high reliability can be provided. However, the use is not limited to a vehicle, and it can be applied to various power sources of other transportation means, for example, a moving object such as an electric train, and it can be also used as a power source for loading such as an uninterruptable power source device.

Examples

Hereinbelow, a description is made in greater detail in view of examples and comparative examples, but the present invention is not limited to the examples given below.

(Example 1)

1. Preparation of electrolyte solution

A mixed solvent of ethylene carbonate (EC), ethylmethyl carbonate (EMC), and diethyl carbonate (DEC) (volume ratio of 30 : 30 : 40) was prepared as a solvent. In addition, 1.0 M $LiPF_6$ was prepared as a lithium salt. In addition, 2% by mass of vinylene carbonate was added to total 100% by mass of the lithium salt and the solvent to prepare an electrolyte solution. Meanwhile, the expression "1.0 M $LiPF_6$" means that the lithium salt ($LiPF_6$) concentration is 1.0 M in the mixture of the mixture of solvent and lithium salt.

2. Production of positive electrode

Solid content consisting of 85% by mass of $LiMn_2O_4$ (average particle diameter: 15 $\mu$m) as a positive electrode active material, 5% by mass of acetylene black as a conductive aid, and 10% by mass of PVdF as a binder was prepared. To this solid content, N-methyl-2-pyrrolidone (NMP), which is a solvent for adjusting the slurry viscosity , was added in a suitable amount, to produce a positive electrode slurry . Next, the positive electrode slurry was coated on both surfaces of an aluminum foil (thickness: 20 $\mu$m) which is a current collector, and subjected to drying and pressing to produce a positive electrode having 18 mg/cm$^2$ of the coating amount on a single surface of the positive electrode active material layer and 157 $\mu$m of the total thickness (including the foil) on both surfaces .

3. Production of negative electrode

A solid content consisting of 95% by mass of artificial graphite (average particle diameter: 20 $\mu$m) as a negative electrode active material, 2% by mass of acetylene black as a conductive aid, 2% by mass of SBR as a binder, and 1% by mass of CMC as a thickening agent (0.8 of the etherification degree, 350,000 of the weight average molecular weight, the same below) was prepared. To this solid content, ion exchanged water, which is a solvent for adjusting the slurry viscosity, was added in a suitable amount, to produce a negative electrode slurry (aqueous slurry). Next, the negative electrode slurry was coated on both surfaces of a copper foil (thickness: 15 $\mu$m) which is a current collector, and subjected to drying and pressing, and then subjected to a heating treatment for 24 hours at 100°C under vacuum atmosphere, to produce a negative electrode having 5.1 mg/cm$^2$ of the coating amount on a single surface of the negative electrode active material layer and 82 $\mu$m of the thickness (including the foil). The specific surface area of the negative electrode active material (artificial graphite) was 3 m$^2$/g (the same below).

4. Process for producing single battery

The positive electrode which has been prepared above was cut to have a rectangular shape of 210 × 181 mm and the negative electrode was cut to have a rectangular shape of 215 × 188 mm (15 pieces of positive electrode and 16 pieces of negative electrode). Those positive electrodes and negative electrodes were alternately laminated mediated by a separator of 219 × 191 mm (polypropylene microporous membrane, thickness of 25 $\mu$m, and porosity of 46%) to produce a power generating element.
To each of the positive electrode and negative electrode of the above power generating element, a tab was fused by welding, and by enclosing it with an electrolyte solution in an outer casing composed of aluminum laminate film, a non-aqueous electrolyte secondary battery (single battery) was completed. The rate capacity of the battery prepared was 14.6 Ah and the ratio of a battery area to the rated capacity was 34.8 cm$^2$/Ah.

(Example 2)

A solid content consisting of 95% by mass of artificial graphite (average particle diameter: 20 $\mu$m) as a negative electrode active material, 2% by mass of acetylene black as a conductive aid, 2% by mass of SBR as a binder, and 1% by mass of CMC as a thickening agent was prepared. To this solid content, ion exchanged water, which is a solvent for adjusting the slurry viscosity, was added in a suitable amount, to produce a negative electrode slurry (aqueous slurry). Next, the negative electrode slurry was coated on both surfaces of a copper foil (thickness: 15 $\mu$m) which is a current collector, subjected to drying and pressing. And then, a non-aqueous electrolyte secondary battery (single battery) was completed similarly to Example 1 except that the negative electrode slurry was subjected to a heating treatment for 10 hours at 130°C under vacuum atmosphere, to produce a negative electrode having 5.1 mg/cm$^2$ of the coating amount on a single surface of the negative electrode active material layer and 82 $\mu$m of the thickness (including the foil).

(Example 3)

A solid content consisting of 95% by mass of artificial graphite (average particle diameter: 20 $\mu$m) as a negative electrode active material, 2% by mass of acetylene black as a conductive aid, 2% by mass of SBR as a binder, and 1% by mass of CMC as a thickening agent was prepared. To this solid content, ion exchanged water, which is a solvent for adjusting the slurry viscosity, was added in a suitable amount, to produce a negative electrode slurry (aqueous slurry). Next, the negative electrode slurry was coated on both surfaces of a copper foil (thickness: 15 $\mu$m) which is a current collector, subjected to drying and pressing. And then, a non-aqueous electrolyte secondary battery (single battery) was completed similarly to Example 1 except that the negative electrode slurry was subjected to a heating treatment for 10 hours at 150°C under vacuum atmosphere, to produce a negative electrode having 5.1 mg/cm$^2$ of the coating amount on a single surface of the negative electrode active material layer and 82 $\mu$m of the thickness (including the foil).

(Example 4)

A solid content consisting of 95% by mass of artificial graphite (average particle diameter: 20 $\mu$m) as a negative electrode active material, 2% by mass of acetylene black as a conductive aid, 2% by mass of SBR as a binder, and 1% by mass of CMC as a thickening agent was prepared. To this solid content, ion exchanged water, which is a solvent for adjusting the slurry viscosity, was added in a suitable amount, to produce a negative electrode slurry (aqueous slurry). Next, the negative electrode slurry was coated on both surfaces of a copper foil (thickness: 15 $\mu$m) which is a current collector, subjected to drying and pressing. And then, a non-aqueous electrolyte secondary battery (single battery) was completed similarly to Example 1 except that the negative electrode slurry was subjected to a heating treatment for 10 hours at 180°C under vacuum atmosphere, to produce a negative electrode having 5.1 mg/cm$^2$ of the coating amount on a single surface of the negative electrode active material layer and 82 $\mu$m of the thickness (including the foil).

(Comparative Example 1)

A solid content consisting of 95% by mass of artificial graphite (average particle diameter: 20 $\mu$m) as a negative electrode active material, 2% by mass of acetylene black as a conductive aid, 2% by mass of SBR as a binder, and 1% by mass of CMC as a thickening agent was prepared. To this solid content, ion exchanged water, which is a solvent for adjusting the slurry viscosity, was added in a suitable amount, to produce a negative electrode slurry (aqueous slurry). Next, the negative electrode slurry was coated on both surfaces of a copper foil (thickness: 15 $\mu$m) which is a current collector, subjected to drying and pressing. And then, a non-aqueous electrolyte secondary battery (single battery) was completed similarly to Example 1 except that the negative electrode slurry was subjected to a heating treatment for 24 hours at 80°C under vacuum atmosphere, to produce a negative electrode having 5.1 mg/cm$^2$ of the coating amount on a single surface of the negative electrode active material layer and 82 $\mu$m of the thickness (including the foil).

(Comparative Example 2)

A solid content consisting of 95% by mass of artificial graphite (average particle diameter: 20 $\mu$m) as a negative electrode active material, 2% by mass of acetylene black as a conductive aid, 2% by mass of SBR as a binder, and 1% by mass of CMC as a thickening agent was prepared. To this solid content, ion exchanged water, which is a solvent for adjusting the slurry viscosity, was added in a suitable amount, to produce a negative electrode slurry (aqueous slurry). Next, the negative electrode slurry was coated on both surfaces of a copper foil (thickness: 15 $\mu$m) which is a current collector, subjected to drying and pressing. And then, a non-aqueous electrolyte secondary battery (single battery) was completed similarly to Example 1 except that the negative electrode slurry was subjected to a heating treatment for 12 hours at 85°C under vacuum atmosphere, to produce a negative electrode having 5.1 mg/cm$^2$ of the coating amount on a single surface of the negative electrode active material layer and 82 $\mu$m of the thickness (including the foil).

(Comparative Example 3)

A solid content consisting of 95% by mass of artificial graphite (average particle diameter: 20 $\mu$m) as a negative electrode active material, 2% by mass of acetylene black as a conductive aid, 2% by mass of SBR as a binder, and 1% by mass of CMC as a thickening agent was prepared. To this solid content, ion exchanged water, which is a solvent for adjusting the slurry viscosity, was added in a suitable amount, to produce a negative electrode slurry (aqueous slurry).

Next, the negative electrode slurry was coated on both surfaces of a copper foil (thickness: 15 $\mu$m) which is a current collector, subjected to drying and pressing. And then, a non-aqueous electrolyte secondary battery (single battery) was completed similarly to Example 1 except that the negative electrode slurry was subjected to a heating treatment for 10 hours at 220°C under vacuum atmosphere, to produce a negative electrode having 5.1 mg/cm$^2$ of the coating amount on a single surface of the negative electrode active material layer and 82 $\mu$m of the thickness (including the foil).

5. Process for initial charge and discharge of single battery

The non-aqueous electrolyte secondary battery (single battery) produced as above in each of Examples 1 to 4 and Comparative Examples 1 to 3 was evaluated according to a charge and discharge performance test. For the charge and discharge performance test, the battery was kept for 24 hours in an incubator at 25°C for performing initial charge. For the initial charge, constant current charge (CC) was performed at current value of 0.05 CA until 4.2 V followed by constant voltage (CV), thus it was charged for 25 hours in total. After that, it was kept for 96 hours in an incubator at 40°C. After that, it was discharged to 2.5 V at current rate of 1 C in an incubator at 25°C, followed by resting time for 10 minutes.

6. Analysis method

(1) Measurement of C=O peak intensity and -OH peak intensity

Infrared absorption spectrum was measured at 4 cm$^{-1}$ of the resolution performance and 32 times of the integration frequency with one time reflection ATR method using a Fourier transform infrared absorption (FT-IR) spectrometer (FTS 7000e manufactured by Agilent Technologies) . Intensity based on the baseline was measured for each absorption peak, and the relative intensity was calculated. The baseline was obtained from a straight line connecting convex parts having high transmittance near 1800 cm$^{-1}$ to 4000 cm$^{-1}$. As a sample, the negative electrode produced in each of Examples 1 to 4 and Comparative Examples 1 to 3 (negative electrode before initial charge) was used. The obtained results are shown in Table 1 described below.

(2) Peeling test for negative electrode active material layer

The binding strength of the negative electrode active material layer was measured with peeling test. Figs. 3 is explanatory diagrams for a method of testing peeling strength. Fig. 3 (a) is a side view schematically illustrating a form in which a negative electrode sample is fixed. The negative electrode produced in each of Examples 1 to 4 and Comparative Examples 1 to 3 (negative electrode before initial charge) was cut to a strip form having 20 mm width to produce a sample 30 (a negative electrode sample 30 in which the negative electrode active material layer 34 is formed on both surfaces of the negative electrode current collector 33), and the negative electrode sample 30 was fixed on a sample fixing plate 31 with a double-sided adhesive tape 32. Fig. 3(b) is a side view schematically illustrating the state where the negative electrode active material layer is peeled off. One end of the negative electrode sample 30 (the end side that is not fixed on the sample fixing plate 31 with the double-sided adhesive tape 32; see Fig. 3 (a)) was clamped with a clamp 35 and raised vertically in the arrow direction, and the load when the negative electrode active material layer 34 is peeled off from the negative electrode sample 30, was measured with a tensile tester. The obtained results are shown in Table 1 described below.

(3) Amount of gas generation in initial charge process of single battery

As for the amount of gas generation during charge, the volume change amount of a single battery between before initial charge process and after completion of 25 hour charge, was measured with Archimedes' method, which was regarded as the amount of gas generation. The obtained results are shown in Table 1 described below.

(4) Moisture amount of negative electrode (active material layer)

The moisture amount of the negative electrode (active material layer) was measured using a Karl-fischer moisture meter (CA-200 manufactured by Mitsubishi Chemical Analytech Co., Ltd.). The negative electrode produced in each of Examples 1 to 4 and Comparative Examples 1 to 3 (negative electrode before initial charge) was cut to a proper size to produce a sample of about 12 g, and the measurement was performed at 200°C of the vaporization heating temperature. The obtained results are shown in Table 1 described below.

As for the negative electrode active material layer produced in Examples of the present invention and Comparative Examples, the -OH peak intensity, the C=O peak intensity, the value of X in Formula (1) (the ratio of the peak intensities), the moisture amount of the negative electrode (active material layer), the peeling strength of the negative electrode active material layer, and the amount of the battery volume change (the amount of gas generation) are shown in Table 1 described below.

Herein, the -OH peak intensity was calculated from (-OH peak intensity)/(C-O-C peak intensity) on the basis of C-O-C stretching vibration-derived peak intensity near 1050 cm$^{-1}$. Further, the C=O peak intensity was similarly calculated from (C=O peak intensity)/(C-O-C peak intensity). As for the peeling strength, those having 20% or less of the strength decrease amount were indicated as O, and those having more than 20% of the strength decrease amount were indicated as × on the basis of Comparative Example 1. The moisture amount of the negative electrode (active material layer) and the amount of the battery volume change (the amount of gas generation) were calculated as the relative ratio to a value of Comparative Example 1 which is regarded as 1.

[Table 1]

| | -OH peak intensity [-] | C=O peak intensity [-] | Ratio of peak intensities X [-] | Moisture amount of negative electrode [Relative ratio to value of Comparative Example 1 which is regarded as 1] | Peeling strength | Amount of battery volume change [Relative ratio to value of Comparative Example 1 which is regarded as 1] |
|---|---|---|---|---|---|---|
| Example 1 | 0.13 | 0.03 | 0.23 | 0.45 | ○ | 0.69 |
| Example 2 | 0.13 | 0.04 | 0.31 | 0.43 | ○ | 0.66 |
| Example 3 | 0.11 | 0.09 | 0.82 | 0.42 | ○ | 0.57 |
| Example 4 | 0.10 | 0.09 | 0.90 | 0.44 | ○ | 0.63 |
| Comparative Example 1 | 0.19 | 0.01 | 0.05 | 1 | ○ | 1 |
| Comparative Example 2 | 0.15 | 0.01 | 0.06 | 0.61 | ○ | 0.77 |
| Comparative Example 3 | 0.09 | 0.11 | 1.20 | 0.37 | × | 0.40 |

When the moisture amount of Example 1 is compared with those of Comparative Example 1 and Comparative Example 2, it is found out that as the peak intensity of a hydroxyl group (-OH) decreases, the residual moisture decreases. This is because water has a hydroxyl group. Next, when the moisture amounts of Examples 1 to 4 are compared, the moisture amount does not change although the peak intensity of a hydroxyl group (-OH) decreases. Further, in Examples 1 to 4, a peak suggesting a carbonyl group (C=O) appeared. This shows that in Examples 1 to 4, the moisture amount in the negative electrode (active material layer) reaches the lower limit value, and if a heating treatment is given in a degree to make the moisture amount in the negative electrode (active material layer) reach the lower limit value, the hydroxyl group (-OH) of a thickening agent CMC decreases by oxidation, and carbonyl group (C=O) of an ester bond is generated. Accordingly, it was found out that by controlling X, the ratio of peak intensities of carbonyl group/hydroxyl group (C=O peak intensity/-OH peak intensity), to be 0.10 or more, it was possible to make the moisture amount be the lower limit value.

When the amount of the battery volume change (the amount of gas generation) of Example 1 is compared with those of Comparative Example 1 and Comparative Example 2, as the moisture amount decreases, the amount of the battery volume change decreases. In addition, when Examples 1 to 4 are compared with Comparative Example 3, as the ratio of the peak intensities X increases, the amount of the battery volume change (the amount of gas generation) tends to decrease. This is because the moisture of the negative electrode (active material layer) and the hydroxyl group (-OH) of CMC used as a thickening agent decrease, and thus the amount of gas generation by electrolysis during charging decreases.

When the peeling strengths of Examples 1 to 4 are compared with those of Comparative Examples 1 to 3, the peeling strength in Comparative Example 3 having the highest X, the ratio of the peak intensities of carbonyl group/hydroxyl group (C=O peak intensity/-OH peak intensity), decreased by more than 20% on the basis of that of Comparative Example 1. This is because the binding strength of the negative electrode active material layer (particularly binder) decreased due to thermal decomposition of the aqueous binder (SBR) and the thickening agent (CMC) used in the negative electrode active material layer.

Accordingly, X, the ratio of the peak intensities of carbonyl group/hydroxyl group (C=O peak intensity/-OH peak intensity) is desirably 1.00 or less (see comparison of Examples 1 to 4 with Comparative Examples 1 to 3). Further, it was found that when X, the ratio of the peak intensities of carbonyl group/hydroxyl group (C=O peak intensity/-OH peak intensity) approximated 1.00 (specifically 0.90 of Example 4), the amount of gas generation decreased, and thus was desirable.

Reference Signs List

1    Outer casing having enclosed power generating element
2    Pressure member
3    Fixing member
4    Electrode tab
10   Lithium ion secondary battery
11   Positive electrode current collector
12   Negative electrode current collector
13   Positive electrode active material layer
15   Negative electrode active material layer
17   Separator
19   Single battery layer
21   Power generating element
25   Positive electrode current collecting plate
27   Negative electrode current collecting plate
28   Battery outer casing
29   Surplus space in battery outer casing
30   Negative electrode sample
31   Sample fixing plate
32   Double-sided adhesive tape
33   Negative electrode current collector (copper foil)
34   Negative electrode active material layer
35   Clamp

**Claims**

1. A negative electrode for a non-aqueous electrolyte secondary battery comprising:

   a current collector; and
   a negative electrode active material layer containing a negative electrode active material, an aqueous binder and a thickening agent having a hydroxyl group and an ester group, wherein
   the content of the aqueous binder in the negative electrode active material layer is 1 to 3% by mass relative to the total amount of the negative electrode active material layer,
   the content of the thickening agent in the negative electrode active material layer is 0.5 to 1.5% by mass relative to the total amount of the negative electrode active material layer, wherein
   the negative electrode active material layer satisfies the following Formula (1):
   [Formula 1]

$$0.10 \leq X \leq 1.00 \qquad (1)$$

   wherein in the formula, X is a ratio of a peak intensity of an infrared absorption spectrum derived from a carbonyl group of an ester group of the negative electrode active material layer to a peak intensity of an infrared absorption spectrum derived from a hydroxyl group of the negative electrode active material layer;
   **characterized in that** the average center line roughness Ra of a surface of the negative electrode active material layer opposed to the current collector side is 0.5 μm to 1.0 μm, wherein Ra is determined according to JIS-B0601-1994.

2. The negative electrode for a non-aqueous electrolyte secondary battery according to claim 1, wherein the thickening agent comprises at least one kind selected from the group consisting of methyl cellulose, carboxymethyl cellulose and a salt thereof, polyvinyl alcohol, polyacrylic acid and a salt thereof, polyethylene glycol and polyethylene oxide.

3. The negative electrode for a non-aqueous electrolyte secondary battery according to claim 1 or 2, wherein the aqueous binder comprises at least one kind selected from the group consisting of styrene-butadiene rubber, acrylonitrile-butadiene rubber, methyl methacrylate-butadiene rubber, methyl methacrylate rubber, and rubber obtained by converting at least a part of the methylhydroxy carbonyl groups of methyl methacrylate rubber to carboxylic acid salt.

4. The negative electrode for a non-aqueous electrolyte secondary battery according to claim 3, wherein the aqueous binder comprises styrene-butadiene rubber.

5. The negative electrode for a non-aqueous electrolyte secondary battery according to any one of claims 1 to 4, wherein the specific surface area of the negative electrode active material is 1 to 5 $m^2/g$.

6. The negative electrode for a non-aqueous electrolyte secondary battery according to any one of claims 1 to 5, wherein the etherification degree of the thickening agent is 0.6 to 1.

7. The negative electrode for a non-aqueous electrolyte secondary battery according to any one of claims 1 to 6, wherein the weight average molecular weight of the thickening agent is 300,000 to 400,000.

8. The negative electrode for a non-aqueous electrolyte secondary battery according to any one of claims 1 to 7, wherein the negative electrode active material layer has a rectangular shape, the length of the short side of the rectangular shape is 100 mm or more, and the length ratio between the long side and the short side of the rectangular shape is 1 to 2.

9. A non-aqueous electrolyte secondary battery having a power generating element enclosed in an outer casing, wherein

the power generating element comprises

a positive electrode in which a positive electrode active material layer is formed on a surface of a positive electrode current collector,

the negative electrode set forth in any one of claims 1 to 8 in which a negative electrode active material layer comprising an aqueous binder and a thickening agent having a hydroxyl group and an ester group is formed on a surface of a negative electrode current collector, and

a separator that maintains an electrolyte solution.

10. The non-aqueous electrolyte secondary battery according to claim 9, wherein a ratio value of a battery area (projected area of the battery including the battery outer casing) to a rated capacity is 5 $cm^2/Ah$ or more, and the rated capacity is 3 Ah or more.

11. The non-aqueous electrolyte secondary battery according to any one of claims 9 or 10, wherein an aspect ratio of the electrode defined as a horizontal to vertical ratio of the positive electrode active material layer having a rectangular shape is 1 to 3.

12. The non-aqueous electrolyte secondary battery according to any one of claims 9 to 11, wherein the power generating element has a stacked structure, and the outer casing is a laminate film comprising aluminum.

**Patentansprüche**

1. Negative Elektrode für eine Sekundärbatterie mit nicht-wässrigem Elektrolyten, umfassend:

einen Stromabnehmer; und

eine Aktivmaterialschicht der negativen Elektrode, die ein Aktivmaterial der negativen Elektrode, ein wässriges Bindemittel und ein Verdickungsmittel mit einer Hydroxylgruppe und einer Estergruppe enthält, wobei

der Gehalt des wässrigen Bindemittels in der Aktivmaterialschicht der negativen Elektrode 1 bis 3 Massen%, bezogen auf die Gesamtmenge der Aktivmaterialschicht der negativen Elektrode, beträgt,

der Gehalt des Verdickungsmittels in der Aktivmaterialschicht der negativen Elektrode 0,5 bis 1,5 Massen%, bezogen auf die Gesamtmenge der Aktivmaterialschicht der negativen Elektrode, beträgt, wobei die Aktivmaterialschicht der negativen Elektrode die folgende Formel (1) erfüllt:

[Formel 1]

$$0{,}10 \leq X \leq 1{,}00 \qquad\qquad (1)$$

wobei in der Formel X ein Verhältnis einer Peakintensität eines Infrarotabsorptionsspektrums, abgeleitet von einer Carbonylgruppe einer Estergruppe der Aktivmaterialschicht der negativen Elektrode, zu einer Peakintensität eines Infrarotabsorptionsspektrums, abgeleitet von einer Hydroxylgruppe der Aktivmaterialschicht der negativen Elektrode, ist;

**dadurch gekennzeichnet, dass** die durchschnittliche Mittellinienrauigkeit Ra einer Oberfläche der Aktivmaterialschicht der negativen Elektrode, die der Stromabnehmerseite gegenüberliegt, 0,5 $\mu$m bis 1,0 $\mu$m beträgt, wobei Ra gemäß JIS-B0601-1994 bestimmt wird.

2. Negative Elektrode für eine Sekundärbatterie mit nicht-wässrigem Elektrolyten gemäß Anspruch 1, wobei das Verdickungsmittel wenigstens eine Art, ausgewählt aus der Gruppe bestehend aus Methylcellulose, Carboxymethylcellulose und einem Salz davon, Polyvinylalkohol, Polyacrylsäure und einem Salz davon, Polyethylenglycol und Polyethylenoxid, umfasst.

3. Negative Elektrode für eine Sekundärbatterie mit nicht-wässrigem Elektrolyten gemäß Anspruch 1 oder 2, wobei das wässrige Bindemittel wenigstens eine Art, ausgewählt aus der Gruppe bestehend aus Styrol-Butadien-Kautschuk, Acrylnitril-Butadien-Kautschuk, Methylmethacrylat-Butadien-Kautschuk, Methylmethacrylatkautschuk und Kautschuk, der durch Umwandeln von wenigstens einem Teil der Methylhydroxycarbonylgruppen von Methylmethacrylatkautschuk in ein Carbonsäuresalz erhalten wird, umfasst.

4. Negative Elektrode für eine Sekundärbatterie mit nicht-wässrigem Elektrolyten gemäß Anspruch 3, wobei das wässrige Bindemittel Styrol-Butadien-Kautschuk umfasst.

5. Negative Elektrode für eine Sekundärbatterie mit nicht-wässrigem Elektrolyten gemäß einem der Ansprüche 1 bis 4, wobei die spezifische Oberfläche des Aktivmaterials der negativen Elektrode 1 bis 5 m$^2$/g beträgt.

6. Negative Elektrode für eine Sekundärbatterie mit nicht-wässrigem Elektrolyten gemäß einem der Ansprüche 1 bis 5, wobei der Veretherungsgrad des Verdickungsmittels 0,6 bis 1 beträgt.

7. Negative Elektrode für eine Sekundärbatterie mit nicht-wässrigem Elektrolyten gemäß einem der Ansprüche 1 bis 6, wobei das Gewichtsmittel des Molekulargewichts des Verdickungsmittels 300.000 bis 400.000 beträgt.

8. Negative Elektrode für eine Sekundärbatterie mit nicht-wässrigem Elektrolyten gemäß einem der Ansprüche 1 bis 7, wobei die Aktivmaterialschicht der negativen Elektrode eine rechteckige Form aufweist, die Länge der kurzen Seite der rechteckigen Form 100 mm oder mehr beträgt und das Längenverhältnis zwischen der langen Seite und der kurzen Seite der rechteckigen Form 1 bis 2 beträgt.

9. Sekundärbatterie mit nicht-wässrigem Elektrolyten mit einem Stromerzeugungselement, das in einem Außengehäuse eingeschlossen ist, wobei das Stromerzeugungselement umfasst:

eine positive Elektrode, in welcher eine Aktivmaterialschicht der positiven Elektrode auf einer Oberfläche eines Stromabnehmers der positiven Elektrode gebildet ist, die in einem der Ansprüche 1 bis 8 angegebene negative Elektrode, in welcher eine Aktivmaterialschicht der negativen Elektrode, die ein wässriges Bindemittel und ein Verdickungsmittel mit einer Hydroxylgruppe und einer Estergruppe umfasst, auf einer Oberfläche des Stromabnehmers der negativen Elektrode gebildet ist, und einen Separator, der eine Elektrolytlösung enthält.

10. Sekundärbatterie mit nicht-wässrigem Elektrolyten gemäß Anspruch 9, wobei ein Verhältniswert einer Batteriefläche (projizierte Fläche der Batterie einschließlich des Außengehäuses der Batterie) zu einer Nennleistung 5 cm$^2$/Ah

oder mehr beträgt und die Nennleistung 3 Ah oder mehr beträgt.

**11.** Sekundärbatterie mit nicht-wässrigem Elektrolyten gemäß einem der Ansprüche 9 oder 10, wobei ein Aspektverhältnis der Elektrode, definiert als ein Horizontal-zu-Vertikal-Verhältnis der Aktivmaterialschicht der positiven Elektrode mit einer rechteckigen Form, 1 bis 3 beträgt.

**12.** Sekundärbatterie mit nicht-wässrigem Elektrolyten gemäß einem der Ansprüche 9 bis 11, wobei das Stromerzeugungselement eine gestapelte Struktur aufweist und das Außengehäuse eine Verbundfolie ist, die Aluminium umfasst.

## Revendications

**1.** Électrode négative destinée à une batterie secondaire à électrolyte non aqueux comprenant :

un collecteur de courant ; et
une couche de matériau actif d'électrode négative contenant un matériau actif d'électrode négative, un liant aqueux et un agent épaississant présentant un groupe hydroxyle et un groupe ester,
la teneur du liant aqueux dans la couche de matériau actif d'électrode négative étant de 1 à 3 % en masse par rapport à la quantité totale de la couche de matériau actif d'électrode négative,
la teneur de l'agent épaississant dans la couche de matériau actif d'électrode négative étant de 0,5 à 1,5 % en masse par rapport à la quantité totale de la couche de matériau actif d'électrode négative,
la couche de matériau actif d'électrode négative satisfaisant la Formule suivante (1) :
[Formule 1]

$$0,10 \leq X \leq 1,00 \qquad (1)$$

où dans la formule, X est un rapport d'une intensité de pic d'un spectre d'absorption infrarouge dérivé d'un groupe carbonyle d'un groupe ester de la couche de matériau actif d'électrode négative à une intensité de pic d'un spectre d'absorption infrarouge dérivé d'un groupe hydroxyle de la couche de matériau actif d'électrode négative ;
**caractérisée en ce que** la rugosité moyenne de ligne centrale Ra d'une surface de la couche de matériau actif d'électrode négative opposée au côté collecteur de courant est de 0,5 $\mu$m à 1,0 $\mu$m, où Ra est déterminée selon la norme JIS-B0601-1994.

**2.** Électrode négative destinée à une batterie secondaire à électrolyte non aqueux selon la revendication 1, l'agent épaississant comprenant au moins un type sélectionné dans le groupe constitué de la méthyl cellulose, de la carboxyméthyl cellulose et d'un sel de celui-ci, de poly(alcool de vinyle), de poly(acide acrylique) et d'un sel de celui-ci, de polyéthylène glycol et de poly(oxyde d'éthylène).

**3.** Électrode négative destinée à une batterie secondaire à électrolyte non aqueux selon la revendication 1 ou 2, dans laquelle le liant aqueux comprend au moins un type sélectionné dans le groupe constitué du caoutchouc de styrène-butadiène, du caoutchouc d'acrylonitrile-butadiène, du caoutchouc de méthacrylate de méthyle-butadiène, du caoutchouc de méthacrylate de méthyle, et du caoutchouc obtenu en convertissant au moins une partie des groupes méthylhydroxy carbonyle du caoutchouc de méthacrylate de méthyle en sel d'acide carboxylique.

**4.** Électrode négative destinée à une batterie secondaire à électrolyte non aqueux selon la revendication 3, le liant aqueux comprenant du caoutchouc de styrène-butadiène.

**5.** Électrode négative destinée à une batterie secondaire à électrolyte non aqueux selon l'une quelconque des revendications 1 à 4, dans laquelle la surface spécifique du matériau actif d'électrode négative est de 1 à 5 m²/g.

**6.** Électrode négative destinée à une batterie secondaire à électrolyte non aqueux selon l'une quelconque des revendications 1 à 5, dans laquelle le degré d'éthérification de l'agent épaississant est de 0,6 à 1.

**7.** Électrode négative destinée à une batterie secondaire à électrolyte non aqueux selon l'une quelconque des revendications 1 à 6, dans laquelle le poids moléculaire moyen en poids de l'agent épaississant est de 300 000 à 400 000.

8. Électrode négative destinée à une batterie secondaire à électrolyte non aqueux selon l'une quelconque des revendications 1 à 7, dans laquelle la couche de matériau actif d'électrode négative présente une forme rectangulaire, la longueur du côté court de la forme rectangulaire est de 100 mm ou plus, et le rapport des longueurs entre le côté long et le côté court de la forme rectangulaire est de 1 à 2.

9. Batterie secondaire à électrolyte non aqueux possédant un élément de production d'énergie enfermé dans un boîtier externe, où
l'élément de production d'énergie comprend
une électrode positive dans laquelle une couche de matériau actif d'électrode positive est formée sur une surface d'un collecteur de courant d'électrode positive,
l'électrode négative exposée selon l'une quelconque des revendications 1 à 8 dans laquelle une couche de matériau actif d'électrode négative comprenant un liant aqueux et un agent épaississant possédant un groupe hydroxyle et un groupe ester est formée sur une surface d'un collecteur de courant d'électrode négative, et
un séparateur qui maintient une solution d'électrolyte.

10. Batterie secondaire à électrolyte non aqueux selon la revendication 9, dans laquelle une valeur de rapport d'une surface de batterie (surface projetée de la batterie incluant le boîtier externe de batterie) à une capacité nominale est de 5 cm$^2$/Ah ou plus, et la capacité nominale est de 3 Ah ou plus.

11. Batterie secondaire à électrolyte non aqueux selon l'une quelconque des revendications 9 ou 10, dans laquelle un rapport d'aspect de l'électrode défini comme rapport horizontal sur vertical de la couche de matériau actif d'électrode positive ayant une forme rectangulaire est de 1 à 3.

12. Batterie secondaire à électrolyte non aqueux selon l'une quelconque des revendications 9 à 11, dans laquelle l'élément de production d'énergie présente une structure empilée, et le boîtier externe est un film stratifié comprenant de l'aluminium.

EP 2 980 884 B1

FIG. 1

FIG. 2(a)

FIG. 2(b)

## FIG. 3(a)

## FIG. 3(b)

**EP 2 980 884 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001250536 A
- US 2012321948 A1
- US 2011281163 A1